# EUROPÄISCHE PATENTSCHRIFT

(11) **EP 3 191 409 B1**
(45) Veröffentlichungstag und Bekanntmachung des Hinweises auf die Patenterteilung: **30.01.2019**
(21) Anmeldenummer: 15763878.4
(22) Anmeldetag: 10.09.2015
(51) Int. Cl.: C01G 49/06, C09C 1/24, C09D 7/00, C08K 3/00, C08K 3/22, C09D 1/00, C09D 7/61

(54) **EISENOXID-ROT-PIGMENTE MIT VERBESSERTEN FARBWERTEN**
IRON OXIDE RED PIGMENTS WITH IMPROVED COLOUR VALUES
PIGMENTS ROUGES D'OXYDE DE FER AYANT DES VALEURS DE COULEUR AMÉLIORÉES

(30) Priorität: 11.09.2014 EP 14184507
(43) Veröffentlichungstag der Anmeldung: 19.07.2017
(73) Patentinhaber: LANXESS Deutschland GmbH, 50569 Köln (DE)
(72) Erfinder: CZAPLIK, Waldemar, 41748 Viersen (DE); KISCHKEWITZ, Jürgen, 40883 Ratingen (DE); SPIEGELHAUER, Stephan, 40764 Langenfeld (DE)
(86) Internationale Anmeldenummer: PCT/EP2015/070745
(87) Internationale Veröffentlichungsnummer: WO 2016/038152

(56) Entgegenhaltungen:
- EP-A1- 1 293 480
- EP-A2- 1 605 023
- WO-A1-2016/034694
- DE-A1- 19 746 262
- US-A- 2 937 927
- US-A- 3 946 103

## Beschreibung

Die vorliegende Erfindung betrifft Eisenoxid-Rot-Pigmente mit verbessertem Farbwerten, ein Verfahren zur Herstellung dieser verbesserten Eisenoxid-Rot-Pigmente nach dem Penniman-Rot-Verfahren mit Nitrat (auch Nitrat-Verfahren oder Direkt-Rot-Verfahren genannt) sowie eine Vorrichtung zu dessen Herstellung.

Eisenoxide finden in vielen technischen Bereichen Anwendung. So werden sie beispielsweise als Farbpigmente in Keramiken, Baustoffen, Kunststoffen, Farben, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Eisenoxide lassen sich durch Fällungs-, Hydrolyse- und Zersetzungsreaktionen von Eisensalzen erhalten (Ullmann's Encyclopedia of Industrial Chemistry, VCH Weinheim 2006, Chapter 3.1.1. Iron Oxide Pigments, S. 61-67). Die mit Abstand größte industrielle Bedeutung haben die Laux-, Copperas-, Fäll-, Calzinier- und Penniman-Rot-Verfahren.

Die wässrige Herstellung von feinteiligem Hämatit, der der Modifikation α-Fe₂O₃ entspricht, ist jedoch deutlich aufwändiger. Durch Verwendung eines Reifungsschritts lässt sich unter Zugabe eines feinteiligen Eisenoxids der Modifikation Maghämit, γ-Fe₂O₃, oder Lepidocrocite, γ-FeOOH, als Keim auch durch eine direkte wässrige Fällung Hämatit herstellen [US 5,421,878; EP0645437A; WO 2009/100767A].

Eine weitere Methode zur Herstellung von Eisenoxid-Rot-Pigmenten ist das sogenannte Penniman-Rot-Verfahren, auch Nitrat-Verfahren oder Direkt-Rot-Verfahren genannt (US 1,327,061; US 1,368,748; US 2,937,927; EP 1106577A: US 6,503,315). Dabei werden Eisenoxidpigmente dadurch hergestellt, dass Eisenmetall unter Zusatz eines Eisensalzes und eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf Eisen einwirkt. Hierbei entsteht eine Hämatit-Keimsuspension. Diese wird auf an sich bekannte Weise zu einer Suspension von Rotpigment aufgebaut, das Pigment wird aus dieser Suspension, falls gewünscht, auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. Die 130er-Norm entspricht dem für Eisenoxidpigment-Farbmessungen gebräuchlichem Referenzstandard Bayferrox® 130 (Produkt der LANXESS Deutschland GmbH, Deutschland).

EP 1106577A offenbart eine Variante des Penniman-Rot-Verfahrens umfassend die Einwirkung von verdünnter Salpetersäure auf Eisen bei erhöhter Temperatur zur Erzeugung von Keimen, d.h. feinteiligen Eisenoxiden mit einer Teilchengröße kleiner als oder gleich 100 nm. Die Reaktion von Eisen mit Salpetersäure ist eine komplexe Reaktion und kann je nach Versuchsbedingungen entweder zu einer Passivierung des Eisens und damit zu einem Stillstand der Reaktion führen oder zu einem Auflösen des Eisens unter Bildung von gelöstem Eisennitrat. Beide Reaktionswege sind nicht erwünscht, und die Herstellung von feinteiligem Hämatit gelingt damit nur unter eingeschränkten Versuchsbedingungen. EP 1106577A beschreibt derartige Bedingungen zur Herstellung von feinteiligem Hämatit. Dabei wird das Eisen mit verdünnter Salpetersäure bei Temperaturen zwischen 90 und 99°C zur Reaktion gebracht.

In der EP1293480 wird ein Verfahren zur Herstellung von granularem Hämatit Partikeln beschrieben, wobei ein sauerstoffhaltiges Gas in Gegenwart von Eisen und Hämatitkeimen durch eine wässrige Eisennitratlösung geleitet wird. Die erhaltenen Hämatit-Pigmente weisen ein Wassergehalt von nicht mehr als 0.5 Gew.-% auf.

In der DE 19746262 wird die Herstellung von Eisenoxid-Pigmente sowie deren Kalzinierung , zu Pigmenten mit extrem niedriegem Wassergehalt beschrieben.

In der EP1605023 werden beschichtete Eisenoxidrotpigmente beschrieben und in US3946103 werden gefällte Eisenoxidrot-Pigmente beschrieben.

In der nachveröffentlichen WO2016/034694 werden Pigmente beschrieben, die in der Summe von a* Purton und a* Aufhellung in den Beispielen 7 und 11 deutlich unter 58 CIELAB Einheiten liegen.

WO 2013/045608 beschreibt ein Verfahren zur Herstellung von Eisenoxid-Rot-Pigmenten, bei dem der Reaktionsschritt der Herstellung der Keime, d.h. von feinteiligem Hämatit mit einer Teilchengröße kleiner als oder gleich 100 nm, verbessert wurde.

Bei dem Nitrat-Verfahren gemäß dem Stand der Technik wird üblicherweise Eisen oder eine Mischung aus Eisen und Wasser vorgelegt. Dann wird üblicherweise die Hämatit-Keimsuspension zu zumindest Eisen, und anschließend Eisen(II)nitratlösung zu der Mischung zugegeben. Die Umsetzung beginnt üblicherweise, nachdem die Temperatur der Reaktionsmischung erhöht wurde, typischerweise auf 70 bis 99°C, und nachdem die Begasung mit einem sauerstoffhaltigem Gas begonnen wurde.

Für die Messung der Farbintensität von Eisenoxid-Rot-Pigmenten gibt es seit langem etablierte Testmethoden, bei denen die Farbigkeit von mit dem Eisenoxid-Rot-Pigmenten eingefärbten Medien wie Beton-Prüfkörper oder Lacksystem gemessen werden. Als Standard-Parameter zur Messung der Farbigkeit von Eisenoxid-Rot-Pigmenten im Lacksystem haben sich die Parameter des sogenannten CIELAB-Farbraums etabliert. Die Grundlagen hierfür sind in der Norm DIN EN ISO 11664-4 " Farbmetrik - Teil 4: CIE 1976 L*a*b* Farbenraum" (Beuth-Verlag, Ausgabe 2011-07) festgelegt. Jede wahrnehmbare Farbe in diesem dreidimensionalem Farbraum ist durch den Farbort mit den Koordinaten L* (Helligkeit), a* (Rot-Grün-Wert) und b* (Gelb-Blau-Wert) definiert. In Anwendung der Gegenfarbentheorie liegen sich hier Grün und Rot auf der a*-Achse und die Farben Gelb-Blau auf der b*-Achse gegenüber. Je positiver ein a*-Wert ist, desto stärker ist die Farbe Rot ausgeprägt. Die Farbe Grün ist dagegen umso stärker ausgeprägt, je negativer der a*-Wert ist. Auf der senkrecht zur a*-Achse liegenden b* Achse verhält sich dies analog zu den Gegenfarben Gelb-Blau. Je positiver ein b*-Wert ist, desto stärker ist die Farbe Gelb ausgeprägt. Die Farbe Blau ist dagegen umso stärker ausgeprägt, je negativer der b*-Wert ist. Die L*-Achse steht senkrecht auf Ebene, die durch die Koordinaten a* und b* gebildet wird und gibt die Helligkeit wieder. Die L*-Achse wird auch als Neutralgrauachse bezeichnet. Sie umfasst die Endpunkte Schwarz (L=0) und Weiß (L=100). Neben diesen Parametern wird auch oft die Farbsättigung C* (auch Chroma, Chromatizität oder Buntheit) angegeben. Dieser Wert ergibt sich direkt aus den Werten a* und b* und stellt die Quadratwurzel der Summe der Quadrate von a* und b* dar. a*, b*, L*, und C* sind dimensionslose Werte. üblicherweise wird aber die Dimension CIELAB-Einheiten in diesem Zusammenhang verwendet.

Bei der Farbmessung von Eisenoxid-Rot-Pigmenten hat sich die Messung in einer sogenannten Abtestung in einem thixotropierten langöligen Alkydharz (nach DIN EN ISO 11664-4:2011-07 und DIN EN ISO 787-25:2007, wobei in Abweichung hierzu eine langöliges Alkydharz mit einem Ölgehalt von 64 Gew.% anstatt 63 Gew.% und ein anderes Thixotropierungsmittel verwendet wird. Details sind in dem Abschnitt Beispiele und Methoden angegeben) als besonders aussagekräftig erwiesen. Dieser Test wird erfindungsgemäß als Lackabtestung bezeichnet. Das Alkydharz hat den Vorteil, dass es nicht trocknet. So sind Messungen schneller möglich, als wenn die Paste vor der Messung erst ausgetrocknet sein muss. Weitere Einzelheiten zu dieser Testmethode sind in dem Abschnitt Beispiele und Methoden angegeben. Dieser Test wird auch zur Spezifizierung von industriell hergestellten Rotpigmenten, zum Beispiel von denen der LANXESS Deutschland GmbH, eingesetzt. Hier werden, wie in der Pigmentindustrie üblich, neben den Absolutwerten a*, b* und L* auch Differenzwerte Δa*, Δb* und ΔL* angegeben. Diese Differenzwerte werden durch Vergleich der Werte der zu messenden Probe mit einem Referenzstandard ermittelt und stellen die Differenz Wert(Probe) minus Wert(Referenz) dar. Die Referenzstandards selbst werden wieder untereinander verglichen und tragen eindeutige Chargennummern, sodass neben dem Vergleich der Absolutwerte a*, b* und L* auch immer ein direkter Vergleich zwischen Proben und Referenzstandards unterschiedlicher Generationen möglich ist, selbst wenn die ursprüngliche Referenzprobe nicht mehr verfügbar ist. Ein weiterer Parameter zur Vergleichsmessung ist der Farbabstand ΔE*. Dieser wird aus den Differenzwerten Δa*, Δb* und ΔL* ermittelt und stellt die Quadratwurzel der Summe der Quadrate von Δa*, Δb* und ΔL* dar.

Für die Durchführung der Lackabtestung gibt es zwei Varianten, nämlich die Messung im Purton und in der Aufhellung. Bei der Purton-Messung wird das Pigment in einer Klarpaste unter in der Norm definierten Standardbedingungen dispergiert. Die Farbwerte der pigmentierten Farbpaste werden dann bestimmt. Bei der Messung in Aufhellung wird der Paste Titandioxid in der Modifikation Rutil zugeben, sodass ein Verhältnis von Pigment zu Titandioxid von 1:5 erreicht wird. Durch die Aufhellung kann die Bewertung der Farbstärke und Farbreinheit eines Pigments noch unter dem Vorhandensein eines Weißpigments, das die Farbe aufhellt, beurteilt werden

Für die Lackindustrie besonders farbreine Eisenoxid-Rot-Pigmente mit einem a*-Wert im Purton von 29 bis 30,5 CIELAB Einheiten können über das Copperas, Fäll und Penniman-Rot Verfahren hergestellt werden. Diese zeichnen sich im Purton in einem der Lackabtestung durch den besonderen Rot- und Gelbstich aus und die Farbsättigung C* beträgt bis zu 40,0 CIELAB Einheiten. In der Aufhellung, also in der oben beschriebenen Mischung mit Titandioxid, zeigen sie jedoch eine deutliche Abnahme im Rotstich, also niedrigere a*-Werte. Aus anwendungstechnischer Sicht wäre es jedoch besonders vorteilhaft, Eisenoxid-Rot Pigmente verfügbar zu haben, die einen sehr hohen Rotstich sowohl im Purton als auch in der Aufhellung als Gemisch mit Titandioxid aufweisen. Als besonders gut geeigneter Parameter um das Verhalten des Rot-Stiches im Purton und Aufhellung zu beschreiben, wird daher die Summe aus den a*-Werten aus Purton und Aufhellung definiert. Vergleicht man verschiedene kommerziell erhältliche Produkte bezüglich dieses Parameters, zeigt sich, dass die Summe aus a*(Purton) und a*(Aufhellung) deutlich unter 58,0 CIELAB-Einheiten liegt.

In der folgenden Tabelle 1 sind die Farbwerte in der Lackabtestung im Purton und in der Aufhellung von unterschiedlichen kommerziell verfügbaren Pigmenten angeführt.

**Tabelle 1: Farbwerte von Eisenoxid-Rotpigmenten nach dem Stand der Technik**

| **Eisenoxid** | **a* Purton** | **b* Purton** | **C* Purton** | **a* Aufhellung** | **b* Aufhellung** | **C* Aufhellung** | **Summe a* Purton + a* Aufhellung)** |
|---|---|---|---|---|---|---|---|
| R1599D ¹⁾ | 30,5 | 24,8 | 39,3 | 27,2 | 18,8 | 33,1 | 57,7 |
| R1299D ¹⁾ | 30,3 | 24,9 | 39,2 | 27,4 | 20,1 | 34,0 | 57,7 |
| SILO208 ²⁾ | 29,7 | 23,8 | 38,0 | 26,1 | 17,4 | 31,4 | 55,8 |
| Bayferrox® 105 ³⁾ | 29,5 | 24,5 | 38,4 | 25,9 | 18,1 | 31,6 | 55,4 |
| Bayferrox®110 ³⁾ | 28,4 | 23,0 | 36,6 | 25,6 | 17,8 | 31,2 | 54,0 |
| Penniman Red 808 ⁴⁾ | 29,3 | 25,2 | 38,7 | 28,2 | 24,7 | 37,5 | 57,5 |
| Penniman Red NS110 ⁴⁾ | 29,7 | 24,5 | 38,5 | 27,2 | 21,2 | 34,4 | 56,9 |
| Pigment analog Beispielen 3 und 4 aus DE4235947A ⁵⁾ | 30,0 | 25,2 | 39,2 | 27,1 | 20,2 | 33,8 | 57,1 |
| Pigment analog Beispielen 3 und 4 ⁵⁾ DE4235947A 5) | 28,8 | 26,4 | 39,1 | 27,8 | 25,7 | 37,9 | 56,6 |

| | | | | | | | |
|---|---|---|---|---|---|---|---|
| ¹⁾ Copperas ® Pigment der Rockwood Pigments NA, Inc., hergestellt nach dem Copperas®-Prozess ²⁾ Ferroxide™ Pigment der Rockwood Pigments NA, Inc., hergestellt nach dem Fällungsprozess ³⁾ Pigmente der LANXESS Deutschland GmbH, hergestellt nach dem Laux-Prozess über einen Kalzinierungsschritt. ⁴⁾ Pimente der Yixing Yuxing Industry and Trading Company, hergestellt nach dem Penniman-Rot-Verfahren (), ⁵⁾ Pigmente hergestellt nach dem Fällungsverfahren. Die Beispiele wurden analog Beispielen 3 und 4 der DE 4235947A hergestellt und deren Farbwerte wurden in der Lackabtestung im Purton und in der Aufhellung gemessen. | | | | | | | |

Ein weitere Anforderung für Eisenoxid-Rot-Pigmente ist ein möglichst niedriger Wert an löslichem Chlorid. Für eine Anwendung von Eisen-Oxid-Rotpigmenten im stahlbewehrten Beton (Kategorie 2, EN12878) ist ein möglichst geringer Chlorid-Gehalt wegen der durch Chlorid verursachten Korrosion wünschenswert. In der Europäischen Norm DIN EN12878 wird eine maximale Chloridkonzentration von 0,1 Gew.% im Pigment vorgeschrieben. Die Bestimmung des Chloridgehalts erfolgt durch Ionenchromatographie.

Der vorliegenden Erfindung lag daher die Aufgabe zugrunde, Eisenoxid-Rot-Pigmente zur Verfügung zu stellen, von denen bei der Einfärbung von Medien wie Beton, Kunststoffen, Farben und Lacken geringere Mengen als von Pigmenten des Standes der Technik benötigt werden, um denselben Rot-Ton zu erreichen, oder mit denen ein intensiverer Farbton erreicht wird, wenn bei der Einfärbung eine gleichen Menge davon wie von einem Pigment nach dem Stand der Technik verwendet wird, wobei diese Eigenschaft sowohl bei intensiver Färbung des Mediums als auch bei schwächerer Färbung durch Verdünnung mit hellere Pigmenten wie Weißpigmenten vorhanden ist. Darüber hinaus lag die Aufgabe zugrunde, ein einfaches Verfahren zur Herstellung solcher Pigmente bereitzustellen.

Gegenstand der Erfindung ist die Bereitstellung von Eisenoxid-Rot-Pigmenten, deren Summe der a*- Werte im Purton und in der Aufhellung in der Lackabtestung (genaue Beschreibung der Lackabtestung siehe Beispiele und Methoden) von mindestens 58,0 CIELAB Einheiten, bevorzugt mehr als 58,5 CIELAB Einheiten, besonders bevorzugt mehr als 59,0 CIELAB Einheiten beträgt, wobei das Hämatit-Pigment einen Wassergehalt von 1,0 Gew.-% oder mehr aufweist, ein Verfahren zu deren Herstellung, sowie deren Verwendung zur Einfärbungen von Beton, Kunststoffen, Farben und Lacken.

Eine weitere Ausführungsform umfasst Eisenoxid-Rot-Pigmente, deren Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 CIELAB Einheiten beträgt, wobei das Hämatit-Pigment einen Wassergehalt von 1,0 Gew.-% oder mehr aufweist.

Eine weitere Ausführungsform umfasst die erfindungsgemäßen Pigmente, deren Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 CIELAB Einheiten beträgt, wobei das Hämatit-Pigment einen Wassergehalt von 1,0 Gew.-% oder mehr aufweist, sowie eine organische Beschichtung, bevorzugt mit Ölen, Wachsen, Fettsäuren oder Fettsäuresalzen, und/oder eine anorganische Beschichtung, bevorzugt mit anorganischen Salzen wie Carbonaten, Oxiden oder Hydroxiden von Alkali- und Erdalkalimetallen oder von Mg, Zn, AI, La, Y, Zr, Sn und/oder Ca oder jeweils nicht.

Die erfindungsgemäßen Eisenoxid-Rot-Pigmente weisen in einer bevorzugten Ausführungsform die Modifikation α-Fe₂O₃ auf. In einer weiteren bevorzugten Ausführungsform umfassen die erfindungsgemäßen Eisenoxid-Rot-Pigmente eine Teilchengröße von 0,1 bis 0,3 µm, besonders bevorzugt weisen zumindest 80 Gew. % der erfindungsgemäßen Eisenoxid-Rot-Pigmente eine Teilchengröße von 0,1 bis 0,3 µm auf. In einer weiteren bevorzugten Ausführungsform weisen die erfindungsgemäßen Eisenoxid-Rot-Pigmente eine Ölzahl von 15 bis 26, bevorzugt von 15 bis 24, gemessen nach DIN EN ISO 787-5: 1995, auf. In einer weiteren bevorzugten Ausführungsform weisen die erfindungsgemäßen Eisenoxid-Rot-Pigmente einen Wassergehalt von 1,0 bis 5,0 Gew.% auf. Das Wasser liegt besonders bevorzugt als Kristallwasser vor. In einer weiteren bevorzugten Ausführungsform weisen die erfindungsgemäßen Eisenoxid-Rot-Pigmente einen Chloridgehalt von 0,001 bis 0,1 Gew.% Chlorid auf. Mit Chloridgehalt ist erfindungsgemäß der Gesamtgehalt an Chlorid im Feststoff gemeint.

In einer besonders bevorzugten Ausführungsform weisen die erfindungsgemäßen Eisenoxid-Rot-Pigmente die Modifikation Hämatit (α-Fe₂O₃), auf, und umfassen eine Teilchengröße von 0,1 bis 0,3 µm, ganz besonders bevorzugt weisen zumindest 80 Gew. % der erfindungsgemäßen Eisenoxid-Rot-Pigmente eine Teilchengröße von 0,1 bis 0,3 µm auf, und weisen eine Ölzahl von 17 bis 26, bevorzugt von 19 bis 24, gemessen nach DIN EN ISO 787-5: 1995, auf und weisen einen Wassergehalt von 1,0 Gew.% oder mehr, bevorzugt von 1,0 bis 5,0 Gew.% auf.

In einer bevorzugten Ausführungsform weisen die erfindungsgemäßen Eisenoxid-Rot-Pigmente zusätzlich ein Newton'sches Fließverhalten auf, wenn sie in Form von Pasten, beispielsweise in Form von Pigment-Universalpasten vorliegen.

Das Newton'sches Fließverhalten wird definiert durch eine bestimmte Abhängigkeit der Viskosität der Paste von der Schergeschwindigkeit. Die Viskosität ist definiert als Maß für die Zähflüssigkeit eines Fluids, beispielsweise einer Pigmentpaste, und weist die Einheit Pa▪s auf. Je niedriger die Viskosität, desto dünnflüssiger ist das Fluid. Die Schergeschwindigkeit ist ein Begriff aus der Rheologie, d.h. der Lehre von Verform- und Fließverhalten von Material und ist definiert als Maß für die mechanische Belastung, der eine Probe bei einer rheologischen Messung unterworfen wird. Schergeschwindigkeit wird auch Schergefälle genannt. Die Schergeschwindigkeit besitzt die Einheit des Kehrwerts der Zeit, üblicherweise1/s. Bei Fluiden mit idealem Newton'schen Fließverhalten ist deren Viskosität unabhängig von der Schergeschwindigkeit, bei der die Viskosität gemessen wird. Die Viskosität für Pigmentpasten wird erfindungsgemäß mit einem Platten-Kegel-Viskosimeter (Rheo3000 der Fa. Brookfield Engineering Laboratories, Inc., USA) bei Schergeschwindigkeiten von 500/s bis 2000/s gemessen. Das Kriterium eines Newton'sches Fließverhaltens ist erfindungsgemäß dann erfüllt, wenn die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte von Schergeschwindigkeiten von 500/s, 1000/s, 1500/s und 2000/s abweicht. Ist eine Messung bei einer Schergeschwindigkeit, beispielsweise dann, wenn die Viskosität größer als die der maximal messbaren Viskosität ist, dann ist das Kriterium eines Newton'sches Fließverhaltens erfindungsgemäß ebenfalls nicht erfüllt. Die Messung der Viskosität bei unterschiedlichen Schergeschwindigkeiten wird erfindungsgemäß bei 20°C durchgeführt. Die zur erfindungsgemäßen Messung eingesetzte Pigmentpaste ist eine übliche Universalpaste mit folgender Zusammensetzung in Gew.%:

| | |
|---|---|
| PEG 200 | 10,0 |
| Wasser | 14,7 |
| Byk 044 | 2,0 |
| Disperbyk 102 | 2,0 |
| Bentone SD 2 | 1,0 |
| Disperbyk 185 | 8,8 |
| Pigment | 61,5 |

Die dabei eingesetzten Komponenten sind:

| | |
|---|---|
| PEG 200: | Polyethylenglycol 200, Merck KGaA, Deutschland |
| Byk 044: | Silikonhaltiger Entschäumer für wässrige Druckfarben und Überdrucklacke. der Firma BYK Chemie GmbH, Deutschland |
| Disperbyk 102 | Lösemittelfreies Netz- und Dispergieradditiv der Firma BYK Chemie GmbH, Deutschland |
| Bentone SD 2 | Rheologisches Additiv der Firma Elementis Specialities, USA |
| Disperbyk 185 | Lösemittelfreies Netz- und Dispergieradditiv der Firma BYK Chemie GmbH, Deutschland |

Die Paste wird hergestellt, indem alle Komponenten 30 Minuten in einem Dissolver bei 4500 rpm miteinander vermischt werden.

Dieser Test wird erfindungsgemäß Pastenviskositätstest genannt.

In dieser Ausführungsform weisen die erfindungsgemäßen Eisenoxid-Rot-Pigmente eine Summe der a*- Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten beträgt, und im Pastenviskositätstest ein Newton'sches Fließverhalten auf, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht.

In einer weiteren Ausführungsform weisen die erfindungsgemäßen Eisenoxid-Rot-Pigmente eine Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0, und im Pastenviskositätstest ein Newton'sches Fließverhalten, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht, auf.

In einer besonders bevorzugten Ausführungsform weisen die erfindungsgemäßen Pigmente eine Summe der a*- Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten beträgt, und im Pastenviskositätstest Viskositäten bei Schergeschwindigkeiten von 500/s, 1000/s, 1500/s und 2000/s von 0,300 bis 0,400 Pa▪s auf.

In einer weiteren besonders bevorzugten Ausführungsform weisen die erfindungsgemäßen Pigmente eine Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0, besonders bevorzugt mehr als 59,0 CIELAB Einheiten, wobei das Hämatit-Pigment einen Wassergehalt von 1,0 Gew.-% oder mehr aufweist und im Pastenviskositätstest Viskositäten bei Schergeschwindigkeiten von 500/s, 1000/s, 1500/s und 2000/s von 0,300 bis 0,400 Pa▪s auf.

Die Erfindung betrifft auch ein Verfahren zur Herstellung der erfindungsgemäßen Eisenoxid-Rot-Pigmente. Die erfindungsgemäßen Eisenoxid-Rot-Pigmente werden bevorzugt durch Umsetzung von Eisen mit einer wässrigen Hämatit-Keimsuspension und einer Eisen(II)salzlösung, bevorzugt Eisen(II)nitrat-Lösung, in Gegenwart von zumindest einem sauerstoffhaltigen Gas, dem sogenannten Penniman-Rot-Verfanren, hergestellt. In einer weiteren bevorzugten Ausführungsform werden die erfindungsgemäßen Eisenoxid-Rot-Pigmente nach einem Verfahren hergestellt, das einen Kalzinierungsschritt bei Temperaturen von größer als 600°C ausschließt.

In einer weiteren Ausführungsform umfasst das erfindungsgemäße Verfahren zumindest die Umsetzung von Eisen, Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und Eisen(II)nitratlösung in Gegenwart von zumindest einem sauerstoffhaltigen Gas bei Temperaturen von 70 bis 99°C, dadurch gekennzeichnet, dass
die Umsetzung während der Begasung mit einem sauerstoffhaltigem Gas in einem pH-Bereich von pH 2,2 bis pH 4,0, bevorzugt von pH 2,2 bis pH 3,0 stattfindet, wobei eine Hämatit-Pigmentsuspension erzeugt wird.

In einer bevorzugten Ausführungsform findet die Umsetzung zumindest in den ersten 40 Stunden während der Begasung mit einem sauerstoffhaltigem Gas, bevorzugt für mehr als 80% der ersten 40 Stunden während der Begasung in einem pH-Bereich von pH 2,2 bis pH 4,0, bevorzugt von pH 2,2 bis pH 3,0 statt.

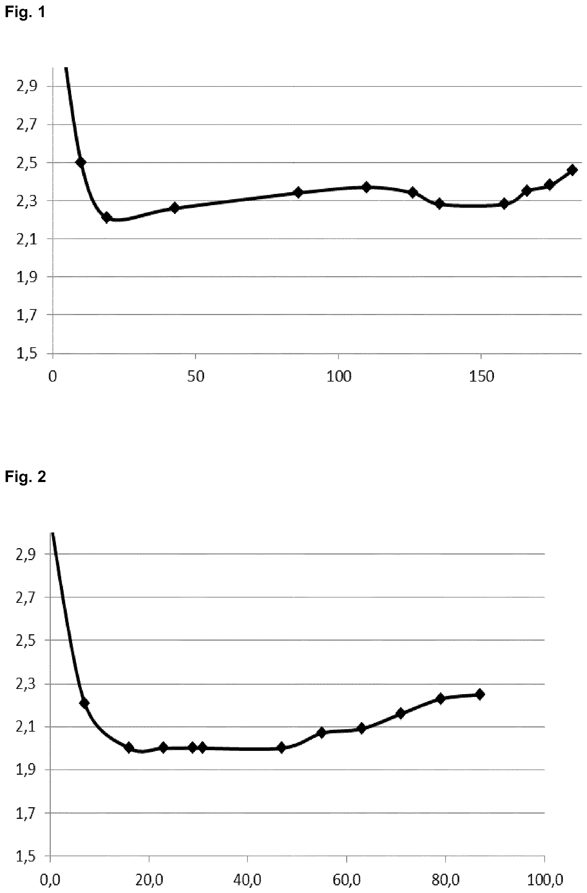

Überraschenderweise gelingt die Regulierung des pH-Wertes der Reaktionssuspension dadurch, dass neben dem sauerstoffhaltigem Gas zusätzlich gasförmiger Stickstoff in die Reaktionsmischung, bevorzugt in die flüssige Phase, eingeleitet wird. Dies kann entweder während der gesamten Reaktionszeit, beispielsweise mit unterschiedlichen Volumina / Stunde Reaktionszeit, oder bevorzugt nur dann erfolgen wenn der pH-Wert der Reaktionsmischung unter 2,2 sinkt. Erfindungsgemäß enthält der gasförmige Stickstoff von 0 bis 10 Vol.% Sauerstoff, bevorzugt von 0 bis 1 Vol. % Sauerstoff. Erfindungsgemäß enthält das sauerstoffhaltige Gas von 15 bis 100 Vol.% Sauerstoff. Bevorzugt wird so viel gasförmiger Stickstoff in die Reaktionsmischung eingeleitet, dass der Sauerstoffgehalt bezogen auf das Gesamtvolumen von sauerstoffhaltigem Gas und gasförmigem Stickstoff von 0 bis 15 Vol.%, bevorzugt von 0 bis 10 Vol.% beträgt. Dabei kann die Einleitung des gasförmigen Stickstoffs derart erfolgen, dass die Einleitung des sauerstoffhaltigen Gases entweder fortgeführt oder unterbrochen wird, aber die Summe der Begasungsvolumina mit sauerstoffhaltigem Gas und gasförmigem Stickstoff zumindest 1 m³ Gasvolumen / m³ Ansatzvolumen / Stunde beträgt.. Durch die Einleitung von gasförmigem Stickstoff in die Reaktionsmischung steigt der pH-Wert der Reaktionsmischung so schnell an, dass damit der pH-Wert der Reaktionsmischung innerhalb der Grenze von pH 2,2 bis pH 4,0, bevorzugt von pH 2,2 bis pH 3,0 gehalten werden kann. Die Stickstoffeinleitung wird erfindungsgemäß nach Erreichen der oberen pH-Grenze von mehr als pH 4,0, bevorzugt mehr als pH 3,0, wieder beendet und erst wieder nach Erreichen der unteren pH-Grenze weniger als pH 2,2, wieder begonnen. In Figur 1 ist ein pH-Profil eines erfindungsgemäßen Verfahrens dargestellt. Auf der x-Achse ist die Reaktionszeit und auf der y-Achse ist der pH-Wert der Reaktionsmischung dargestellt.

Eine Verringerung des Begasungsvolumens mit dem sauerstoffhaltigen Gas unter 0,2 Gasvolumen / m³ Ansatzvolumen / Stunde ohne zusätzliche Einleitung von gasförmigem Stickstoff führt hingegen nur kurzfristig zu einer Anhebung des pH-Wertes, führt aber anschließend innerhalb von weniger als einer Stunde aufgrund einer eintretenden Passivierung des in der Reaktionsmischung enthaltenen Eisens zu einem starken Absinken des pH-Wertes auf pH 1,7 oder weniger. Eine Passivierung des Eisens wird durch die Bildung von geschlossenen Eisenhydroxid und Eisenoxid Ablagerungen an der Eisenoberfläche statt Das Eisen wird so oberflächlich vollständig von einer geschlossenen Eisenoxid/Eisenhydroxid Schicht benetzt. Dies führt zur unerwünschten vorzeitigen Beendigung und damit zu einer unvollständigen Umsetzung.

Das pH-Profil einer typischen Umsetzung gemäß dem Penniman-Rot-Verfahren nach dem Stand der Technik ist in Figur 2 dargestellt.

Auf der x-Achse ist die Reaktionszeit und auf der y-Achse ist der pH-Wert der Reaktionsmischung dargestellt. Üblicherweise liegt der pH-Wert der Reaktionsmischung bei 2,5 oder mehr und wird durch die Mischung der sauren Eisen(II)nitratlösung und der sauren Hämatitkeim-Suspension definiert. Nach Beginn der Begasung bei erhöhten Temperaturen, typischerweise bei 70 bis 99°C, sinkt der pH-Wert innerhalb von ca. 20 Stunden auf unter 2,1 ab und steigt dann innerhalb von weiteren 40 Stunden wieder auf einen pH-Wert von 2,1 bis 2,3. In Umsetzungen, die ein solches pH-Profil aufweisen, werden Hämatit-Pigmente erhalten, die eine Summe der a*-Werte im Purton und in der Aufhellung von 57,5 und weniger aufweist.

In einer Ausführungsform wird die Umsetzung so lange durchgeführt, bis das Hämatit-Pigment den gewünschten Farbton in der Lackabtestung, d.h. die entsprechenden a*-Werte im Purton und in der Aufhellung aufweist. Üblicherweise steigen die a*-Werte während der in Umsetzung in Gegenwart von zumindest einem sauerstoffhaltigen Gas bei Temperaturen von 70 bis 99°C an. Daher werden während der Umsetzung zu unterschiedlichen Zeiten Proben gezogen und in der Lackabtestung untersucht. Üblicherweise kann eine Prüfung in der Lackabtestung innerhalb von einer Stunde durchgeführt werden. Innerhalb dieser Zeit können sich die Farbwerte des Hämatit in der Reaktionsmischung wieder leicht ändern. Bei einer großtechnischen Herstellung gemäß des erfindungsgemäßen Verfahrens, die erfahrungsgemäß sehr reproduzierbar verläuft, wird aber der Fachmann den optimalen Zeitpunkt zum Abbruch der Reaktion bestimmen können.

In einer weiteren Ausführungsform umfasst das erfindungsgemäße Verfahren die Abtrennung des Hämatit-Pigments von der Hämatit-Pigmentsuspension nach üblichen Methoden.

Die Umsetzung von Eisen, Hämatit-Keimsuspension und Eisen(II)nitratlösung in Gegenwart von zumindest einem sauerstoffhaltigen Gas bei Temperaturen von 70 bis 99°C wird auch Pigmentaufbau genannt.

Die nach dem erfindungsgemäßen Verfahren hergestellten Eisenoxid-Rot-Pigmente weisen die Modifikation Hämatit (α-Fe₂O₃) auf und werden daher auch im Zusammenhang mit dieser Erfindung Hämatit-Pigmente genannt.

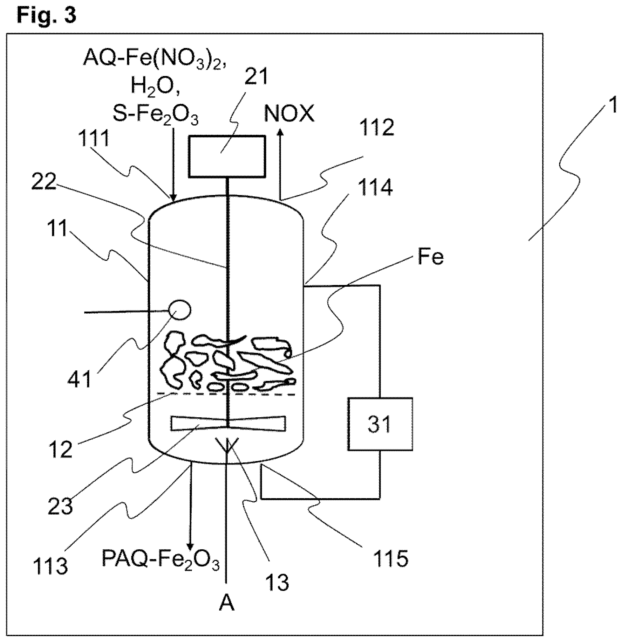

Der Pigmentaufbau gemäß des erfindungsgemäßen Verfahrens wird in einer Ausführungsform in einem Reaktor gemäß Figur 3 durchgeführt.

Die Erfindung umfasst weiterhin zur Durchführung des erfindungsgemäßen Verfahrens geeignete Vorrichtungen. Diese werden nachstehend anhand der Figur 3 näher erläutert.

In Figur 3 ist die Darstellung einer erfindungsgemäßen Vorrichtung wiedergegeben.

In Figur 3 bedeuten:
- A: sauerstoffhaltiges Gas
- Fe: Eisen
- AQ-Fe(NO₃)₂: Eisen(II)nitrat-Lösung
- S-Fe₂O₃: Hämatit-Keimsuspension
- PAQ- Fe₂O₃: Hämatit-Pigmentsuspension
- H₂O: Wasser
- NOX: stickoxidhaltiger Stoffstrom (Abgas aus der Herstellung der Hämatit-Pigmentsuspension)
- 1: Reaktor zur Herstellung von Hämatit-Pigmentsuspension
- 11: Reaktionsbehälter
- 12: Vorlage für Eisen
- 13: Begasungseinheit
- 111: Einlass für Eisen(II)nitrat-Lösung, Hämatit-Keimsuspension
- 112: Auslass für NOX
- 113: Auslass für Hämatit-Pigmentsuspension
- 114: Auslass für flüssige Phase
- 115: Einlass für flüssige Phase
- 2: Rühreinrichtung
- 21: Antrieb
- 22: Verbindung zwischen Antrieb und Rührorgan
- 23: Rührorgan
- 31: Pumpe
- 41: pH-Elektrode

Reaktor 1 umfasst typischerweise einen oder mehrere Reaktionsbehälter aus Werkstoffen, die gegen die Einsatzstoffe beständig sind. Einfach Reaktionsbehälter können z.B. gemauerte oder geflieste in die Erde eingelassene Behälter sein. Die Reaktoren umfassen beispielsweise auch Behälter aus Glas, salpetersäurebeständigem Kunststoffen, wie z.B. Polytetrafluorethylen (PTFE), Stahl, z.B. emaillierter Stahl, kunststoff- oder lackbeschichteter Stahl, Edelstahl mit der Werkstoffnummer 1.44.01. Die Reaktionsbehälter können offen oder geschlossen sein. In bevorzugten Ausführungsformen der Erfindung sind die Reaktionsbehälter geschlossen. Die Reaktionsbehälter sind typischerweise für Temperaturen zwischen 0 und 150°C und für Drucke von 0,05 MPa bis 1,5 MPa ausgelegt.

Eine bevorzugte Ausführungsform eines Reaktors **1** ist in Figur 1 wiedergegeben. Reaktor **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115,** eine Rühreinrichtung **2** umfassend einen Antrieb **21,** eine Verbindung zwischen Antrieb und Rührorgan **22,** ein Rührorgan **23,** eine Pumpe **31** und eine pH-Elektrode **41** auf. Auslass **114,** Einlass **115** und Pumpe **31** sind so über eine Leitung miteinander verbunden, dass die flüssige Phase darüber im Kreislauf aus dem Reaktionsbehälter **11** heraus und wieder in den Reaktionsbehälter **11** hinein gefördert werden kann.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** und Auslass **113** für die Hämatit-Pigmentsuspension und gegebenenfalls eine pH-Elektrode **41** auf.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, eine Rühreinrichtung **2** umfassend einen Antrieb **21,** eine Verbindung zwischen Antrieb und Rührorgan **22**, ein Rührorgan **23** und gegebenenfalls eine pH-Elektrode **41** auf.

Eine weitere bevorzugte Ausführungsform eines Reaktors **1** weist zumindest Reaktionsbehälter **11,** Vorlage **12** für Eisen, Begasungseinheit **13** für das zumindest eine sauerstoffhaltige Gas **A,** Einlass **111** für zumindest Eisen(II)nitrat-Lösung und Hämatit-Keimsuspension, Auslass **112** für einen stickoxidhaltigen Stoffstrom **NOX,** Auslass **113** für die Hämatit-Pigmentsuspension, Auslass für flüssige Phase **114,** Einlass für flüssige Phase **115,** eine Pumpe **31** und gegebenenfalls eine pH-Elektrode **41** auf.

Das erfindungsgemäße Verfahren wird im Folgenden detaillierter beschrieben.

Die Figuren beschreiben:
- Figur 1:: pH-Profil einer Umsetzung gemäß des erfindungsgemäßen Verfahrens. Die Zeit (h) ist auf der x-Achse, der pH-Wert der Reaktionsmischung auf der y-Achse aufgetragen.
- Figur 2:: pH-Profil eines Nitrat-Verfahrens nach dem Stand der Technik. Die Zeit (h) ist auf der x-Achse, der pH-Wert der Reaktionsmischung auf der y-Achse aufgetragen.
- Figur 3:: Reaktor **1** zur Durchführung des erfindungsgemäßen Verfahrens

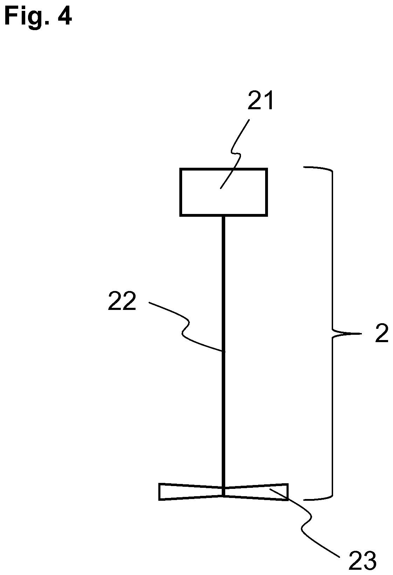

- Figur 4:: Rühreinrichtung **2**

Es sei an dieser Stelle angemerkt, dass der Rahmen der Erfindung alle beliebigen und möglichen Kombinationen der oben stehenden und im Folgenden aufgeführten, allgemeinen Bereichen oder in Vorzugsbereichen genannten Komponenten, Wertebereiche bzw. Verfahrensparameter umfasst.

Die im erfindungsgemäßen Verfahren eingesetzten wässrigen Hämatit-Keimsuspensionen und die darin enthaltenen Hämatit-Keime sind aus dem Stand der Technik bekannt. Hierzu wird auf die Beschreibung des Standes der Technik verwiesen. Die in der wasserhaltigen Hämatit-Keimsuspension enthaltenen Hämatit-Keime umfassen solche mit einer Teilchengröße von 100 nm oder weniger und einer spezifische BET-Oberfläche von 40 m²/g bis 150 m²/g, (gemessen nach DIN 66131). Das Kriterium der Teilchengröße dann als erfüllt, wenn zumindest 90% der Hämatit-Keime eine Teilchengröße von 100 nm oder weniger, besonders bevorzugt von 30 nm bis 90 nm, aufweisen. Die im erfindungsgemäßen Verfahren eingesetzten wässrigen Hämatit-Keimsuspensionen umfassen typischerweise Hämatit-Keime mit einer runden, ovalen oder hexagonalen Teilchenform. Der feinteilige Hämatit weist typischerweise eine hohe Reinheit auf. Als Fremdmetalle sind in dem für die Herstellung der Hämatit-Keimsuspension eingesetzten Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können. Typischerweise weisen die in der wasserhaltigen Hämatit-Keimsuspension enthaltenen Hämatit-Keime einen Mangangehalt von 0,1 bis 0,7 Gew.%, bevorzugt 0,4 bis 0,6 Gew.%, auf. Mit Keimen dieser Qualität lassen sich farbstarke rote Eisenoxidpigmente herstellen.

Die im erfindungsgemäßen Verfahren eingesetzten Eisen(II)nitratlösungen sind aus dem Stand der Technik bekannt. Hierzu wird auf die Beschreibung des Standes der Technik verwiesen. Typischerweise weisen diese Eisen(II)nitratlösungen Konzentrationen von 50 bis 150 g/l Fe(NO₃)₂ (Angabe Fe(NO₃)₂ bezogen auf wasserfreie Substanz) auf. Neben Fe(NO₃)₂ können die Eisen(II)nitrat-Lösungen auch Mengen von 0 bis 50 g/l Fe(NO₃)₃ enthalten. Vorteilhaft sind jedoch möglichst niedrige Mengen an Fe(NO₃)₃.

Als Eisen wird das erfindungsgemäße Verfahren gewöhnlich Eisen in Form von Draht, Blechen, Nägeln, Granalien oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 10 mm Millimetern auf. Die Größe von Drahtbündeln oder von Blechen, die in das Verfahren eingesetzt werden, bemisst sich üblicherweise nach praktikablen Gesichtspunkten. So muss der Reaktor mit diesem Einsatzmaterial ohne Schwierigkeiten befüllt werden können, was in der Regel durch ein Mannloch erfolgt. Solches Eisen wird unter anderem als Schrott, oder als Nebenprodukt in der Metallverarbeitungs-Industrie, beispielsweise Stanzbleche, erzeugt.

Das im erfindungsgemäßen Verfahren eingesetzte Eisen weist in der Regel einen Eisengehalt von >90 Gew% auf. Als Verunreinigungen treten in diesem Eisen üblicherweise Fremdmetalle wie z.B. Mangan, Chrom, Silizium, Nickel, Kupfer, und andere Elemente auf. Es kann jedoch auch ohne Nachteile Eisen mit einem höheren Reinheitsgrad eingesetzt werden. Typischerweise wird Eisen in einer Menge zwischen 20 und 150 g/l bezogen auf das Volumen der Reaktionsmischung zu Beginn der erfindungsgemäßen Umsetzung eingesetzt. In einer weiteren bevorzugten Ausführungsform wird das Eisen, bevorzugt in Form von Stanzblechen oder Drähten, auf der Eisenvorlage über deren Fläche mit einer bevorzugten Schüttdichte von kleiner 2000 kg/m³, besonders bevorzugt kleiner 1000 kg/m³ verteilt. Die Schüttdichte kann beispielsweise durch Biegen von Blechen zumindest einer Eisenqualität und/oder durch gezieltes Legen des Eisens realisiert werden. Dies führt dazu, dass typischerweise mehr als 90 Volumenprozent des unter der Eisenvorlage eingeblasenen sauerstoffhaltigen Gases die Eisenvorlage passiert, ohne dass sich das sauerstoffhaltige Gas unter der Eisenvorlage aufstaut.

Die Eisenvorlage, beispielsweise Vorlage **12,** ermöglicht einen Austausch von Suspension und Gas durch in der Eisenvorlage vorhandene Öffnungen. Typische Ausführungsformen für die Eisenvorlage können Siebböden, Lochböden oder Gitter darstellen. In einer Ausführungsform beträgt das Verhältnis zwischen der kumulierten Fläche an Öffnungen und der gesamten Vorlagefläche von 0,1 bis 0,9, bevorzugt von 0,1 bis 0,3. Die für den Suspensionsaustausch erforderlichen Löcher oder Öffnungen werden typischerweise so gewählt, dass Durchfallen des Eisens durch die Eisenvorlage weitestgehend vermieden wird. Die Eisenvorlage, beispielsweise Vorlage **12,** kann vom Durchmesser dem Reaktorinnendurchmesser, beispielsweise dem Innendurchmesser des Reaktionsbehälters **11,** entsprechen, oder auch kleiner ausgelegt werden. Im letzteren Fall wird bevorzugt seitlich an der Eisenvorlageeinrichtung eine Wandung angebracht, die ein Herabfallen von Eisen vermeidet. Diese Wandung kann Suspensions-durchlässig, beispielsweise ausgeführt als Gitter, oder Suspensions-undurchlässig sein und beispielsweise die Form einer Röhre oder eines oben offenen Quader entsprechen.

Erfindungsgemäß wird die Gesamtmenge an Eisen in einer Menge von 100 bis 140 Gew.%, bevorzugt von 100 bis 120 Gew.% der bei der Reaktion umgesetzten Eisenmenge für eine Durchführung des Verfahrens vorgelegt. Die bei der Reaktion umgesetzte Eisenmenge wird über Differenzwägung der Eisenmenge vor und nach der Reaktion ermittelt.

In einer Variante nach dem Stand der Technik eine gewisse Menge Eisen vorgelegt und dann weiteres Eisen während der gesamten Reaktionsdauer portionsweise zugeben, wobei insgesamt ein deutlicher Überschuss, typischerweise 150 bis 200 Gew.% der bei der Reaktion umgesetzten Eisenmenge eingesetzt wird. Hierdurch kann der pH-Wert der Reaktionsmischung zwar angehoben werden, eine Verbesserung der Farbeigenschaften der resultierenden Pigmente kann aber nicht erreicht werden.

In einer bevorzugten Ausführungsform wird im Verfahren zur Herstellung der Hämatit-Keimsuspension und/oder der Eisen(II)nitratlösung und/oder der Hämatit-Pigmentsuspension als Wasser salzarmes Wasser eingesetzt. Als Maß der Salzfracht kann vereinfacht die Leitfähigkeit betrachtet werden. Salzarmes Wasser im Sinne der Erfindung weist eine Leitfähigkeit von 20 µS/cm oder weniger, bevorzugt von 10 µS/cm oder weniger, besonders bevorzugt von 5 µS/cm oder weniger, auf. Mehrwertige Anionen wie z.B. Phosphat, Silikat, Sulfat und Carbonat die in Betriebswasser häufig enthalten sind, können einen flockenden Effekt auf die Eisenoxidpigmente besitzen und führen dazu, dass das Eisenoxidpigment schon während der Reaktion ausflockt und sich am Reaktorboden als Sediment absetzt. Um diesen Effekt zu vermeiden, wird bevorzugt salzarmes Wasser, z.B. vollentsalztes Wasser (VE-Wasser), destilliertes Wasser oder Wasser aus Umkehrosmose, verwendet. Weiterhin werden dadurch die Farbwerte der Hämatit-Pigmente In einer besonders bevorzugten Ausführungsform wird im Verfahren zur Herstellung der Hämatit-Keimsuspension und der Eisen(II)nitratlösung und der Hämatit-Pigmentsuspension als Wasser salzarmes Wasser eingesetzt. Dadurch werden nochmals die Farbwerte der Pigmente verbessert.

Im erfindungsgemäßen Verfahren erfolgt die Umsetzung von zumindest Eisen, Hämatit-Keimsuspension und Eisen(II)nitratlösung in Gegenwart von zumindest einem sauerstoffhaltigen Gas bei Temperaturen von 70 bis 99°C.

Das zumindest eine sauerstoffhaltige Gas ist bevorzugt ausgewählt aus Luft, Sauerstoff, über Umgebungstemperatur erwärmte Luft oder mit Wasserdampf angereicherte Luft.

Gemäß des erfindungsgemäßen Verfahrens erfolgt die Umsetzung von zumindest Eisen, Hämatit-Keimsuspension und Eisen(II)nitratlösung derart, dass zumindest die während der Umsetzung vorhandene flüssige Phase mittels mechanischer und/oder hydraulischer Durchmischung durchmischt wird oder eben nicht. Da sich in der flüssigen Phase suspendierter Hämatit befindet, erfolgt gegebenenfalls die mechanische und/oder hydraulische Durchmischung bevorzugt derart, dass der in der flüssigen Phase suspendierte Hämatit in der flüssigen Phase gleichmäßig verteilt bleibt und sich nicht im unteren Teil der flüssigen Phase anreichert.

Unter mechanischer Durchmischung wird die Durchmischung der flüssigen Phase mittels geeigneten Vorrichtungen verstanden. Erfindungsgemäß enthält die flüssige Phase auch darin suspendierten Feststoffe wie die Hämatit-Keime oder das Hämatit-Pigment sowie weitere Feststoffe wie z.B. Eisenpartikel. Bei der mechanischen Durchmischung umfassen die geeigneten Vorrichtungen Rühreinrichtungen, beispielsweise Axialrührer, Radialrührer und Tangentialrührer. Rühreinrichtungen, wie Rühreinrichtung **2** in Figur 1, weisen zumindest ein Rührorgan, wie Rührorgan **23** in Figur 1, beispielsweise Propeller, Wendel oder Blätter, auf, die eine Strömung der flüssigen Phase erzeugen. Rühreinrichtungen weisen außerdem typischerweise einen Antrieb, wie Antrieb **21** in Figur 1, z.B. einen Motor, und eine Verbindung zwischen Rührorgan und Antrieb **22,** z.B. eine Welle oder eine magnetische Kopplung auf. Je nach Rührertyp werden Strömungen in radialer Richtung, d.h. rechtwinklig zur Rührachse, oder in axialer Richtung, d.h. parallel zur Rührachse, oder Mischungen davon erzeugt. Beispielsweise erzeugen Blattrührer bevorzugt radiale Strömungen, Schrägblattrührer und Propellerrührer axiale Strömungen. Axiale Strömungen können nach oben oder nach unten gerichtet sein. Im Rahmen der vorliegenden Erfindung wird eine mechanischer Durchmischung der flüssigen Phase bevorzugt, die axial von unten nach oben auf das Eisen gerichtet ist. Dadurch wird gewährleistet, dass auch die flüssige Phase, die sich in den Hohlräumen der Eisenteile befindet, mit der flüssigen Phase, die sich außerhalb der Hohlräume der Eisenteile befindet, durchmischt wird. Bevorzugt befindet sich das zumindest eine Rührorgan unterhalb und/oder oberhalb des Eisens. Ebenfalls bevorzugt sind als Rührer Axialrührer, besonders bevorzugt Schrägblattrührer oder Propellerrührer.

In einer Ausführungsform sind bei radial wirkenden Rührorganen zusätzlich Strömungsstörer an der Innenseite der Wand des Reaktionsbehälters **1** vorhanden. Dadurch wird Mitrotieren der flüssigen Phase und die dadurch auftretende Bildung von Tromben vermieden.

Der Grad der mechanischen Durchmischung wird über die äußere Umfangsgeschwindigkeit des Rührorgans, beispielsweise des Rührorgans **23,** definiert. Bevorzugte Umfangsgeschwindigkeiten betragen 0,5 - 15 m/s, gemessen an dem Umfang des Kreises, der durch den Durchmesser des Rührorgans gebildet wird. Der Leistungseintrag in die flüssige Phase, der anhand der Leistungsaufnahme des Rührers abgeleitet werden kann, beträgt erfindungsgemäß 0,1 bis 5 kW pro m³-Ansatzvolumen, bevorzugt 0,4 bis 3 kW pro m³-Ansatzvolumen. Das Verhältnis von Rührorgandurchmesser zu Reaktorinnendurchmesser beträgt bevorzugt 0,1 bis 0,9. Der Leistungseintrag in die flüssige Phase errechnet sich aus der Leistungsaufnahme des Rührers multipliziert mit dem Wirkungsgrad des Rührers in Prozent. Typische Wirkungsgrade von Rührern, die im erfindungsgemäßen Verfahren eingesetzt werden, liegen zwischen 70 und 90%. Im Rahmen der Erfindung werden Umfangsgeschwindigkeiten von 1 bis 15 m/s und ein Leistungseintrag von mindestens 0,4 kW/m³ Ansatzvolumen besonders bevorzugt.

In einer weiteren Ausführungsform erfolgt eine hydraulische Durchmischung mit Hilfe einer Pumpe, beispielsweise Pumpe **31,** die die flüssige Phase aus dem Reaktor an einem Auslass, beispielsweise Auslass **114,** entnimmt und dem Reaktor wieder an anderer Stelle an einem Einlass, beispielsweise Einlass **115,** zuführt. An dem Ein- und Auslass sowie in dem gesamten Reaktionsgemisch werden hierbei Strömungen erzeugt. Eine hydraulische Durchmischung erfolgt mit Hilfe einer Pumpe, beispielsweise Pumpe **31,** die die flüssige Phase aus dem Reaktor an einem Auslass, beispielsweise Auslass **114,** entnimmt und dem Reaktor wieder an anderer Stelle an einem Einlass, beispielsweise Einlass **115,** zuführt. An dem Ein- und Auslass sowie in dem gesamten Reaktionsgemisch werden hierbei Strömungen erzeugt. Im Rahmen der Erfindung werden Umpumpmengen von 0,1 bis 20 Ansatzvolumina/Stunde bevorzugt. Beispielsweise beträgt die Umpumpmenge bei 30 m³ Ansatzvolumen und einem Wert von 5 Ansatzvolumina / Stunde 150 m³ /Stunde. In einer weiteren Ausführungsform werden Umpumpmengen bevorzugt, die eine Strömungsgeschwindigkeit am Einlass, beispielsweise Einlass **115,** von mindestens 0,05 m/s, bevorzugt von mindestens 0,06 bis 15 m /s, erzeugen. Hierbei wird die Strömungsgeschwindigkeiten am Eingang direkt am Übergang der Leitung, aus der die umgepumpten flüssige Phase in die Reaktionsmischung im Reaktorinnenraum strömt, gemessen. In einer weiteren Ausführungsform ist die Strömung aus dem Einlass, beispielsweise Einlass **115,** auf die Eisenvorlage, beispielsweise Eisenvorlage **12,** gerichtet, bevorzugt von unterhalb der Eisenvorlage auf die Eisenvorlage gerichtet mit einem Abstand von weniger als 2 m, bevorzugt weniger als 1 m. In einer weiteren Ausführungsform ist der Einlass, beispielsweise Einlass **115,** als Rohrleitung oder als Zweistoffstrahler oder als Düse ausgeführt..

In einer bevorzugten Ausführungsform des erfindungsgemäßen Verfahrens erfolgt die Umsetzung von zumindest Eisen, Hämatit-Keimsuspension und Eisen(II)nitratlösung derart, dass sie unter einer Begasung mit zumindest einem sauerstoffhaltigen Gas mit einer Begasungsvolumen von 6 m³ Gasvolumen / m³ Ansatzvolumen / Stunde oder weniger, bevorzugt von 0,2 bis 6 m³ Gasvolumen / m³ Ansatzvolumen / Stunde, besonders bevorzugt von 0,2 bis 5 m³ Gasvolumen / m³ Ansatzvolumen / Stunde, ganz besonders bevorzugt von 0,2 bis 3 m³ Gasvolumen / m³ Ansatzvolumen / Stunde erfolgt.

In einer weiteren Ausführungsform erfolgt die Begasung mit zumindest einem sauerstoffhaltigen Gas ohne mechanische und ohne hydraulische Durchmischung. Nur die Begasung mit sauerstoffhaltigem Gas führt hier zu einer starken Durchmischung der Reaktionsmischung, beispielsweise bei Begasungsvolumina von 7 bis 10 m³ pro Stunde und m³ Ansatzvolumen, wodurch in der Reaktionsmischung eine starke Konvektion und eine starke Blasenbildung, vergleichbar einem starken Sieden einer Flüssigkeit, an der Oberfläche der Reaktionsmischung erzeugt wird.

Die Reaktionsmischung umfasst erfindungsgemäß alle Einsatzstoffe und die daraus entstehenden festen, flüssigen und gasförmigen Produkte. Während der Umsetzung entsteht auch ein stickoxidhaltiger Stoffstrom **NOX.** In einer bevorzugten Ausführungsform wird der stickoxidhaltiger Stoffstrom **NOX** aus dem Reaktor herausgeleitet, beispielsweise über den Auslass **112** von Reaktor **1.** Das Ansatzvolumen wird erfindungsgemäß als das Gesamtvolumen der flüssigen und festen Bestandteile der Reaktionsmischung definiert, das sich zu einem jeweiligen Zeitpunkt der Umsetzung in dem Reaktionsbehälter, beispielsweise in Reaktor **1,** befindet. Das Ansatzvolumen kann beispielsweise zu jedem Zeitpunkt der Umsetzung über eine Füllstandsanzeige des Reaktors, in dem die Umsetzung durchgeführt wird, ermittelt werden.

Die Begasung mit zumindest einem sauerstoffhaltigen Gas erfolgt bevorzugt derart, dass das zumindest eine sauerstoffhaltige Gas unterhalb der Eisenvorlage, beispielsweise Vorlage **12,** in flüssige Phase der Reaktionsmischung eingebracht wird. Bevorzugt wird für die Einleitung des Gases eine Begasungseinheit, beispielsweise Begasungseinheit **13,** wie z.B. Begasungsring, Düsen, (Zwei)-Stoffstrahlern oder einer mit Löchern versehenen Rohrleitung, die sich innerhalb der Reaktionsmischung befindet, verwendet. Hierfür muss das zumindest eine sauerstoffhaltige Gas einen ausreichenden Druck aufweisen, um gegen den hydrostatischen Druck der Flüssigkeitssäule der Reaktionsmischung wirken zu können. Erfindungsgemäß wird, beispielsweise über die Begasungseinheit **13** oder eine andere Vorrichtung, gasförmiger Stickstoff dann in die Reaktionsmischung eingeleitet, wenn der pH-Wert der Reaktionsmischung unter 2,2 fällt. Die Einleitung von gasförmigem Stickstoff in die Reaktionsmischung wird beendet, wenn sich der pH-Wert wieder in dem Bereich von pH 2,2 bis pH 4,0, bevorzugt von pH 2,2 bis pH 3,0, befindet. Der pH-Wert der Reaktionsmischung kann über regelmäßige Probennahme der Reaktionsmischung oder über eine sich innerhalb des Reaktionsbehälters befindliche pH-Wert-Mess-Sonde, beispielsweise pH-Sonde **41,** erfolgen. Die pH-Sonde **41** ist so angebracht, dass sie sich vollständig innerhalb der Reaktionsmischung befindet.

Während des erfindungsgemäßen Verfahrens wird auf den in der flüssigen Phase enthaltenen Hämatit-Keim das Pigment aufgebaut, wodurch eine Hämatit-Pigmentsuspension erzeugt wird, dessen Farbwerte, bevorzugt dessen a*- und b*-Werte in der Lackabtestung, sich während der Reaktion durch die beim Pigmentaufbau sich ändernden Teilchengröße und/oder -morphologie ändern. Durch Messen der Farbwerte des in der Hämatit-Pigmentsuspension enthaltenen Hämatit-Pigments wird der Zeitpunkt bestimmt, zu dem das erfindungsgemäße Verfahren abgebrochen wird. Das erfindungsgemäße Verfahren wird abgebrochen, wenn das Hämatit-Pigment in der Lackabtestung die geforderte Summe der a*- Werte im Purton und in der Aufhellung in der Lackabtestung von mindestens 58,0 CIELAB Einheiten, bevorzugt mehr als 58,5 CIELAB Einheiten, besonders bevorzugt mehr als 59,0 CIELAB Einheiten aufweist. Eine ausführliche Beschreibung der durchgeführten Lackabtestung findet sich im Unterpunkt Beispiele und Methoden. Dies erfolgt durch Beendigung der Begasung, gegebenenfalls durch gleichzeitiges Abkühlen der Reaktionsmischung auf eine Temperatur von unter 70°C. Typische Reaktionszeiten für die erfindungsgemäße Umsetzung liegen bei 10 bis 150 Stunden, abhängig vom gewünschten Farbton.

In einer bevorzugten Ausführungsform erfolgt nach der erfindungsgemäßen Umsetzung die Abtrennung des Hämatit-Pigments von der Hämatit-Suspension nach üblichen Methoden, bevorzugt durch Filtration und/oder Sedimentation und/oder Zentrifugation. Ebenfalls bevorzugt erfolgt Waschen nach der Abtrennung erhaltenen Filterkuchens und nachfolgende Trocknung des Filterkuchens. Ebenfalls bevorzugt werden vor der Abtrennung des Hämatit-Pigments von der Hämatit-Pigmentsuspension ein oder mehrere Siebungsschritte, besonders bevorzugt mit unterschiedlichen Maschenweiten und mit absteigenden Maschenweiten, durchgeführt. Dies hat den Vorteil, dass dadurch Fremdkörper, beispielsweise Metallstücke, von der Hämatit-Pigmentsuspension abgetrennt werden, die sonst das Hämatit-Pigment verunreinigen würden.

Für die Abtrennung des Hämatit-Pigments von der Hämatit-Pigmentsuspension können alle dem Fachmann bekannten Verfahren durchgeführt werden, z.B. Sedimentation mit anschließender Abtrennung der wässrigen Phase oder Filtration über Filterpressen, beispielsweise über Membranfilterpressen.

In einer bevorzugten Ausführungsform des erfindungsgemäßen Verfahrens kann zumindest ein Sulfatsalz, beispielsweise Eisen(II)sulfat und/oder ein Alkali- oder Erdalkalisulfat, bevorzugt Eisen(II)sulfat und/oder Natriumsulfat, zur Hämatit-Pigmentsuspension während oder vor der Siebung und/oder während oder vor der Abtrennung gegeben werden. Dies hat den Vorteil, dass die Sedimentation des Hämatit-Pigments aus der Hämatit-Pigmentsuspension beschleunigt wird. Dies erleichtert die nachfolgende Abtrennung des Hämatit-Pigments.

Gegebenenfalls erfolgt anschließend zumindest eine Wäsche des so abgetrennten Sedimentes oder Filterkuchens. Gegebenenfalls erfolgt nach der Abtrennung und/oder der Wäsche eine Trocknung des so abgetrennten Hämatit-Pigments-, beispielsweise mit Filtertrocknern, Bandtrocknern, Knettrocknern, Spinflash-Trocknern, Trockenschränken oder Sprühtrocknern. Bevorzugt erfolgt die Trocknung mit Bandtrocknern, Tellertrocknern, Knettrocknern und/oder Sprühtrocknern.

Überraschenderweise werden mit dem erfindungsgemäßen Verfahren Eisenoxid-Rot-Pigmente bereitgestellt, die eine bisher nicht erreicht Farbqualität zusätzlich alle weiteren Eigenschaften aufweisen, die für eine hervorragende Einfärbung von Medien wie Keramiken, Baustoffen, Kunststoffen, Farben, Lacken und Papier erforderlich sind. Die erfindungsgemäßen Eisenoxid-Rot-Pigmente weisen darüber hinaus in einer besonderen Ausführungsform in Form von Pigmentpasten ein Newton'sches Fließverhalten auf. Dadurch wird die Verarbeitbarkeit der Pigmente in der Pasten- und Lackherstellung vereinfacht. Darüber hinaus sind die erfindungsgemäßen Eisenoxid-Rot-Pigmente mit einem einfacheren Verfahren herstellbar als die Copperas-Pigmente, die von der Farbstärke den erfindungsgemäßen Pigmenten am nächsten kommen.

Die Erfindung betrifft auch die Verwendung des erfindungsgemäßen Eisenoxid-Rot-Pigments zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, oder die Verwendung als Adsorptionsmittel, Sensor, Katalysator, oder die Verwendung als Komponente in Batterien oder Akkumulatoren, Elektroden oder die Verwendung als Rohstoff zur Herstellung anderer Eisenoxide oder Eisenchemikalien.

Die Erfindung betrifft auch ein Verfahren zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, mit dem nach dem erfindungsgemäßen Eisenoxid-Rot-Pigment, wobei die Einfärbung nach an sich bekannten Methoden erfolgt.

Die Erfindung betrifft auch ein Erzeugnis aus der Farben-, Lack-, Beschichtungs-, Baustoff-, Kunststoff- oder Papierindustrie, aus Lebensmitteln, Einbrenn- oder Coil-Coat-Lacken, Sandgranulaten, Kalksandsteinen, Emaille, Keramik-Glasuren, Asphalt oder Rindenmulch, oder aus Produkten der Pharmaindustrie, bevorzugt von Tabletten, enthaltend das erfindungsgemäße Eisenoxid-Rot-Pigment.

### Beispiele und Methoden:

### Titration Eisen(II) und Eisen(III)bestimmung:

Der Gehalt an Eisen(II)nitrat kann indirekt über die Messung des Eisen(II)-Gehaltes über eine potentiometrischen Titration einer mit Salzsäure angesäuerten Probenlösung mit Cer(III)sulfat bestimmt werden.

### pH-Messung:

pH-Messungen wurden mit einem Messgerät der Firma Knick, Protos MS3400-160 unter Verwendung von Knick, MemoSens, SE533X/2-NMSN durchgeführt. Vor der Messung wurde eine Kalibrierung mit Pufferlösungen von pH 4,65 und pH 9,23 (gemäß DIN 19267) vorgenommen. Die pH-Messung erfolgte innerhalb des gerührten Reaktionskessels bei 85°C..

### Messung des Chloridgehalts:

Die Bestimmung des Chloridgehalts erfolgt durch Ionenchromatographie.

### Verwendete Eisenqualitäten:

Eisenstanzbleche mit einer Dicke von 0,8 mm wurden verwendet die einen Mangan-Gehalt von weniger gleich 2500 ppm Mangan, weniger gleich 150 mg Chrom, Weniger gleich 0,07 % Kohlenstoff, weniger gleich 500 ppm Aluminium, weniger gleich 400 ppm Titan und weniger gleich 250 ppm Kupfer enthalten haben.

### VE-Wasser (Vollentsalztes Wasser):

Das verwendete salzarme Wasser (VE-Wasser) weist eine Leitfähigkeit von 4 µS/cm auf. Über den Leitfähigkeitswert kann die lonenkonzentration abgeleitet werden. Die Messung erfolgte über eine elektrochemische Widerstandsmessung mit einem Gerät der Firma WTW. Alternativ zum vollentsalztem Wasser kann z.B. auch destilliertes Wasser oder aufgereinigtes Wasser aus einer Umkehrosmoseanlage verwendet werden, solange die Leitfähigkeit der oben genannten Spezifikation entspricht.

### Farbabtestung:

Prüfung der Farbwerte in Purton und Aufhellung sowie der Farbstärke in der Aufhellung in einem thixotropierten langöligen Alkydharz (in Anlehnung an DIN EN ISO 11664-4:2011-07 und DIN EN ISO 787-25:2007). Zur Prüfung der Farbwerte von anorganischen Buntpigmenten wird das Pigment in einer Bindemittelpaste auf Basis eines nichttrocknenden langöligen Alkydharz dispergiert Die pigmentierte Paste wird in einen Pastenteller eingestrichen und anschließend im Vergleich zum Bezugspigment farbmetrisch ausgewertet.

### 1. Arbeitsgeräte

- Tellerfarbenausreibmaschine (TFAM), Plattendurchmesser 240mm*
- Präzisionswaage: Empfindlichkeit 0,001 g (Purton) Empfindlichkeit 0,0001g (Aufhellung)
- Spektralfarbmessgerät mit der Messgeometrie d/8°
- Palettmesser mit elastischer, hochglanzpolierter Klinge (Klingenlänge ca.100mm, Breite ca.20mm)
- Pastenteller und Rakel in Anlehnung an DIN EN ISO 787-25:2007

### 2. Hilfsmittel

### 2.1 Purton

Die Prüfpaste klar (thixotropiertes langöliges Alkydharz hergestellt in Anlehnung an DIN EN ISO 787-25:2007) enthält 95 Gew.% Alkydharz (WorléeKyd P151 der Firma Worlée-Chemie GmbH, Deutschland) und als Thixotropierungsmittel 5 Gew.% Luvotix HAT (Lehmann & Voss & Co. KG, Deutschland). Dabei wird das Luvotix in das auf 70 bis 75 °C vorgewärmten Alkydharz eingerührt und anschließend bei 95 °C so lange gerührt, bis sich das gesamte Thixotropierungsmittel gelöst hat. Die abgekühlte Paste wird schließlich auf einem Dreiwalzwerk Bläschen-frei gewalzt.

### 2.2 Aufhellung

- Prüfpaste weiß (60 Gew.Prüfpaste klar + 40 Gew.% Titandioxid (R-KB-2 der Firma Sachtleben Pigment GmbH, Deutschland)
- Testbenzin und Putzlappen zum Reinigen der Geräte (gültig für 2.1 und 2.2)

### 3. Durchführung

### 3.1 Prüfung der Farbwerte im Purton

5,00 g der Prüfpaste klar werden auf den unteren Teil der Tellerfarbenausreibmaschine (TFAM) aufgebracht. 2,6 g des zu testenden Pigments wird mit der 'Prüfpaste klar' auf der unteren Platte der Farbenausreib-maschine außerhalb des Mittelpunkts mit dem Palettmesser ohne Druck vorgemischt bis es vollständig benetzt ist. Anschließend wird diese Mischung mit 3 x 25 Umdrehungen dispergiert. Nach jeweils 25 Umdrehungen wird das Mahlgut von der oberen Platte mit dem Palettmesser abgenommen und mit dem Mahlgut auf der unteren Platte nochmals gemischt und außerhalb des Mittelpunktes verteilt. Die Farbenausreibmaschine wird während der gesamten Dispergierung am vorderen Bügel mit 2,5kg Zusatzgewicht belastet. Die fertig präparierte Paste wird mit dem Palettmesser durchmischt und bis zur Messung auf einem Pastenteller überführt. Zur Messung wird mittels eines Pastenrakels die überschüssige Paste auf dem Pastenteller mit leichtem Druck abgezogen. Nach einer Ruhezeit von 1 Minute erfolgt die Messung der Farbwerte unmittelbar.

### 3.2 Prüfung der Farbwerte in der Aufhellung

5,00 g der 'Prüfpaste weiß' werden auf den unteren Teil der Farbenausreibmaschine (TFAM) aufgebracht. 0,400 g des zu prüfenden Pigmentes werden eingewogen, womit ein Massenverhältnis Pigment zu Titandioxd von 1:5 erreicht wird.
Das jeweilige Pigment wird mit dem Bindemittel auf der unteren Platte der Farbenausreibausreibmaschine außerhalb des Mittelpunkts mit dem Palettmesser ohne Druck vorgemischt bis es vollständig benetzt ist. Anschließend wird diese Mischung mit 5 x 25 Umdrehungen dispergiert. Nach jeweils 25 Umdrehungen wird das Mahlgut bei laufendem Motor von der oberen Platte mit dem Palettmesser abgenommen und mit dem Mahlgut auf der unteren Platte nochmals gemischt und außerhalb des Mittelpunktes verteilt. Die Farbenausreibmaschine wird während der gesamten Dispergierung am vorderen Bügel mit 2,5 kg Zusatzgewicht belastet. Die fertig präparierte Paste wird mit dem Palettmesser durchmischt und bis zur Messung auf einem Pastenteller überführt.
Zur Messung wird mittels eines Pastenrakels die überschüssige Paste auf dem Pastenteller mit leichtem Druck abgezogen. Nach einer Ruhezeit von 1 Minute erfolgt die Messung der Farbwerte unmittelbar.

Andere Dispergieraggregate, wie z. B. Mikrodismembrator S (Fa. Sartorius) oder 2-Planetenzentrifuge (Dual Axis Centrifugal oder Vortex-Mischer), können verwendet werden, wenn durch Korrelationsprüfungen sichergestellt wird, dass mit den verwendeten Einstellungen und Verfahren eine gleichwertige Dispergierung erfolgt.

### 4. Auswertung

Die farbmetrische Auswertung richtet sich nach folgenden Normen:
DIN EN ISO 11664-4 (2011-07). Farbmetrische Bestimmung von Farbmaßzahlen und Farbabständen im angenähert gleichförmigen CIELAB-Farbenraum
DIN 5033 Teil 7 Farbmessung, Messbedingungen für Körperfarben; Lichtart C wie unter Punkt 2.1.1 definiert; Messgeometrie d/8° wie unter Punkt 3.2.3 definiert
EN ISO 787-25 : 2007 Allgemeines Prüfverfahren für Pigmente und Füllstoffe-Teil 25: Vergleich der Farbe von Weiß-, Schwarz- und Buntpigmenten in Purtonsystemen; farbmetrisches Verfahren (ISO 787-25:2007).

### Herstellung der Hämatit-Keimsuspension

### Keimherstellung

37 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wurden 423 kg VE-Wasser vorgelegt und mit 120 upm (3,2 m/s, Schrägblattrührer, 50 cm Durchmesser, der Leistungseintrag betrug 0,6 kW/m³ Ansatzvolumen) gerührt. Die Eisenvorlage war vollständig vom Wasser bedeckt. Das Gemisch wurde auf 90°C aufgeheizt und anschließend wurden 97 kg einer 25 gew.%igen Salpetersäure innerhalb von 60 Minuten zudosiert. Die Reaktion wurde bis zu einem Erreichen eines pH-Wertes von <2,0 durchgeführt. Hierfür wurden 8 Stunden benötigt. Die erhaltene Hämatit-Keimsuspension wurde anschließend auf Umgebungstemperatur abgekühlt und in einen Container abgefüllt. Die benötigte Menge an Hämatit-Keimkonzentration wurde anschließend nach vollständigem Aufrühren des Keimes im Container entnommen und für einen Penniman Aufbau eingesetzt. Die Hämatit-Keimkonzentration (als Fe₂O₃) betrug 130 g/l.

### Herstellung der Eisen(II)nitrat-Lösung

62 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wurden 423 kg VE-Wasser vorgelegt und mit 120 upm (3,2 m/s, Schrägblattrührer, 50 cm Durchmesser, der Leistungseintrag betrug 0,6 kW/m³ Ansatzvolumen)gerührt. 277 kg einer 25 gew.%igen Salpetersäure wurden innerhalb von 200 Minuten zudosiert. Die Reaktion wurde bis zu einem Erreichen eines pH-Wertes von 5,0 durchgeführt. Hierfür wurden 15 Stunden benötigt. Die erhaltene Eisen(II)nitratlösung wurde anschließend auf Umgebungstemperatur abgekühlt und in einen Container abgefüllt. Nach 24 h Sedimentationszeit wurde die obere Phase (Klarphase) vom gelb/braunen Sediment abgetrennt und anschließend in einem Penniman Aufbau eingesetzt. Die Eisen(II)nitrat-Konzentration betrug 120 g/l.

### Beispiel 1

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wurde auf dem Siebboden gleichmäßig verteilt. Anschließend wird VE-Wasser und Eisen(II)nitrat in den Mengen zugeben, so dass ein Volumen von 510 Liter erreicht wurde und die Konzentration an Eisen(II)nitrat (gerechnet als wasserfreies Eisennitrat) 62 g/l betrug. Das Gemisch wurde während der gesamten Reaktionszeit mit einem Rührer durchmischt (80 upm, 2,1 m/s, Schrägblattrührer, 50 cm Durchmesser, der Leistungseintrag betrug 0,31 kW/m³ Ansatzvolumen). 1 Stunde nach Zugabe der Eisen(II)nitrat Lösung wurden 161 Liter Hämatit-Keimsuspension mit einer Konzentration von 130 g/l (bezogen auf Fe2O3) zugeben und das Gemisch auf 85°C aufgeheizt. Nach 1 Stunde bei 85°C wurde die Begasung mit 800 l/h Luft begonnen. Zusätzlich wurde bei Bedarf 2 m³/h Stickstoff über einen Begasungsring eingeleitet, um den ReaktionspH-Wert im Bereich von 2,2-2,4 zu halten (Einschaltung der Stickstoffbegasung bei pH-Werten von 2,2 und wieder Abschalten bei pH 2,4).
Während der Reaktion wurden in Abständen von 4 h jeweils 1 Liter Suspensionsproben entnommen, die über eine Filternutsche abfiltriert und mit VE-Wasser gewaschen wurden. Der Waschvorgang wurde solange fortgeführt, bis das Filtrat eine Leitfähigkeit von <1000 µS/cm aufwies. Der Filterkuchen wurde anschließend bei 80°C bis zu einer Restfeuchte kleiner 5 Gew.% getrocknet und die Farbe im Lacksystem (für eine genaue Beschreibung der Farbabtestung siehe Methoden) bestimmt. Nach Erreichen des gewünschten Farbraumes wurde die Reaktionsmischung mit Eisen(II)sulfat versetzt (29 Liter mit 206 g/l FeSO4) und anschließend über eine Filterpresse filtriert und das erhaltene Hämatit-Pigment mit VE-Wasser bis zu einer Leitfähigkeit des Filtrates von <1000 µS/cm gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert. Das Hämatit-Pigment wurde so in Pulverform in einer Ausbeute von 81,0 kg erhalten. Die Reaktionszeit betrug insgesamt 185 h. Die Farbabtestung erfolgte gemäß der voran beschriebenen Methodenbeschreibung. Der Chlorid-Gehalt im getrockneten Pigment wurde mit 0,006 Gew.% bestimmt. Die Viskositäten in dem Pastenviskositätstest betrugen: 0,358 Pa▪s (bei 500/s), 0,341 Pa-s (bei 1000/s), 0,337 Pa-s (bei 1500/s) und 0,344 Pa-s (bei 2000/s).

### Beispiel 2 (Vergleichsbeispiel)

55 kg Eisenblech mit einer Dicke von etwa 1 mm wurden in einem 1 m³-Reaktor, ausgestattet mit Siebboden (Maschenweite ca. 10 mm), Begasungsring (am Reaktorboden), Umpumpung und Schrägblattrührer vorgelegt. Der Begasungsring und der Rührer sind unterhalb des Siebbodens angebracht, der Auslass der Umpumpung seitlich an der Eisenschüttung, die Ansaugung der Umpumpung am Reaktorboden. Das Eisenblech wird auf dem Siebboden gleichmäßig verteilt. Anschließend wird VE-Wasser und Eisen(II)nitrat in den Mengen zugeben, so dass ein Volumen von 510 Liter erreicht wurde und die Konzentration an Eisen(II)nitrat (gerechnet als wasserfreies Eisennitrat) 62 g/l betrug. Das Gemisch wurde während der gesamten Reaktionszeit mit einem Rührer durchmischt (80 upm, 2,1 m/s, Schrägblattrührer, 50 cm Durchmesser, der Leistungseintrag betrug 0,31 kW/m³ Ansatzvolumen). 1 Stunde nach Zugabe der Eisen(II)nitrat Lösung wurden 161 Liter Hämatit-Keimsuspension mit einer Konzentration von 130 g/l (bezogen auf Fe2O3) zugeben und das Gemisch auf 85°C aufgeheizt. Nach 1 Stunde bei 85°C wurde die Begasung mit 800 l/h Luft begonnen. Der Reaktions pH-Wert ist in Fig 1 dargestellt.. Während der Reaktion wurden in Abständen von 4 h jeweils 1 Liter Suspensionsproben entnommen, die über eine Filternutsche abfiltriert und mit VE-Wasser gewaschen wurden. Der Waschvorgang wurde solange fortgeführt, bis das Filtrat eine Leitfähigkeit von <1000 µS/cm aufwies. Der Filterkuchen wurde anschließend bei 80°C bis zu einer Restfeuchte kleiner 5 Gew.% getrocknet und die Farbe im Lacksystem (für eine genaue Beschreibung der Farbabtestung siehe Methoden) bestimmt. Nach Erreichen des gewünschten Farbraumes wurde die Reaktionsmischung mit Eisen(II)sulfat versetzt (29 Liter mit 206 g/l FeSO4) und anschließend über eine Filterpresse filtriert und das erhaltene Hämatit-Pigment mit VE-Wasser bis zu einer Leitfähigkeit des Filtrates von <1000 µS/cm gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert. Das Hämatit-Pigment wurde so in Pulverform in einer Ausbeute von 76,0 kg erhalten. Die Reaktionszeit betrug insgesamt 96 h. In der Lackabtestung wurde ein a*-Wert im Purton von 29,5 CIELAB-Einheiten und in der Aufhellung ein a* von 25,1 CIELAB-Einheiten gemessen. Die Summe der a*-Werte beträgt dementsprechend 54,6 CIELAB-Einheiten. Die Lackabtestung erfolgte gemäß der voran beschriebenen Methodenbeschreibung

**Tabelle 2: Farbwerte der Beispiele in der Lackabtestung**

| **Beispiel** | **a* Purton** | **b* Purton** | **C* Purton** | **a* Aufhellung** | **b* Aufhellung** | **C* Aufhellung** | **Summe a* Purton + a* Aufhellung** |
|---|---|---|---|---|---|---|---|
| 1 | 31,0 | 25,0 | 39,8 | 28,7 | 20,8 | 35,4 | 59,7 |
| 2 (zum Vergleich) | 29,5 | 22,2 | 36,9 | 25,1 | 15,2 | 9,3 | 54,6 |

**Tabelle 3: Vergleichswerte bezogen auf den internen Referenzstandard eines Pigments des Typs R1599D**

| **Beispiel** | **Δa* Purton** | **Δb* Purton** | **ΔC* Purton** | **Δa* Aufhellung** | **Δb* Aufhellung** | **ΔC* Aufhellung** | **Summe Δa* Purton+ Δa* Aufhellung** |
|---|---|---|---|---|---|---|---|
| 1 | 0,5 | 0,2 | 0,5 | 1,5 | 2,0 | 2,3 | 2,0 |
| 2 (zum Vergleich) | -1,0 | -2,6 | -2,4 | -2,1 | -3,6 | -3,8 | -3,1 |

## Patentansprüche

1. Hämatit-Pigment, **dadurch gekennzeichnet, dass** deren Summe der a*- Werte im Purton und in der Aufhellung in der Lackabtestung von 58,0 bis 61,0 CIELAB Einheiten, bevorzugt von 58,0 bis 60,0 CIELAB Einheiten, weiterhin bevorzugt von 58,5 bis 61,0 CIELAB Einheiten, weiterhin bevorzugt von 58,5 bis 60,0 CIELAB Einheiten, besonders bevorzugt von 59,0 bis 61,0 CIELAB Einheiten, weiterhin besonders bevorzugt von 59,0 bis 60,0 beträgt, wobei das Hämatit-Pigment einen Wassergehalt von 1,0 Gew.-% oder mehr aufweist.

2. Hämatit-Pigment nach Anspruch 1, umfassend die Modifikation α-Fe₂O₃.

3. Hämatit-Pigment nach Anspruch 1 oder 2, umfassend eine organische Beschichtung, bevorzugt mit Ölen, Wachsen, Fettsäuren oder Fettsäuresalzen, und/oder eine anorganische Beschichtung, bevorzugt mit Carbonaten, Oxiden oder Hydroxiden von Alkali- und Erdalkalimetallen oder von Mg, Zn, AI, La, Y, Zr, Sn und/oder Ca.

4. Hämatit-Pigment nach einem Anspruch 1 bis 3, umfassend weder eine organische Beschichtung noch eine anorganische Beschichtung.

5. Hämatit-Pigment nach einem Anspruch 1 bis 4 mit eine Teilchengröße von 0,1 bis 0,3 µm.

6. Hämatit-Pigment nach nach Anspruch 5, mit eine Teilchengröße von 0,1 bis 0,3 µm. wobei zumindest 80 Gew. % des Hämatit-Pigments eine Teilchengröße von 0,1 bis 0,3 µm aufweisen.

7. Hämatit-Pigment nach einem Anspruch 1 bis 6 mit einem Wassergehalt von 1,0 Gew.% bis 5.0 Gew.-%.

8. Hämatit-Pigment nach einem Anspruch 1 bis 7, **dadurch gekennzeichnet, dass** sie im Pastenviskositätstest ein Newton'sches Fließverhalten aufweisen, wobei die Viskosität bei jedem Messwert zu Schergeschwindigkeiten von 500/s, 1000/s, 1500/s und 2000/s um 10% oder weniger, bevorzugt um 5% oder weniger, von dem arithmetischem Mittelwert der Messwerte der Schergeschwindigkeiten von 500/s, 1000/s, 1500/s und 2000/s abweicht.

9. Hämatit-Pigment nach einem Anspruch 1 bis 8, **dadurch gekennzeichnet, dass** sie im Pastenviskositätstest Viskositäten bei Schergeschwindigkeiten von 500/s, 1000/s, 1500/s und 2000/s von 0,300 bis 0,400 Pa▪s aufweisen.

10. Verfahren zur Herstellung von Hämatit-Pigmenten gemäß Anspruch 1, umfassend die Umsetzung von Eisen, Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und Eisen(II)nitratlösung in Gegenwart von zumindest einem sauerstoffhaltigen Gas bei Temperaturen von 70 bis 99°C, **dadurch gekennzeichnet, dass** die Umsetzung während der Begasung mit einem sauerstoffhaltigem Gas in einem pH-Bereich von pH 2,2 bis pH 4,0, bevorzugt von pH 2,2 bis pH 3,0 stattfindet, wobei eine Hämatit-Pigmentsuspension erzeugt wird.

11. Verfahren zur Herstellung von Hämatit-Pigmenten nach Anspruch 10, **dadurch gekennzeichnet, dass** die Umsetzung zumindest in den ersten 40 Stunden während der Begasung mit einem sauerstoffhaltigem Gas, bevorzugt für mehr als 80% der ersten 40 Stunden während der Begasung, in einem pH-Bereich von pH 2,2 bis pH 4,0, bevorzugt von pH 2,2 bis pH 3,0 stattfindet.

12. Verfahren zur Herstellung von Hämatit-Pigmenten nach Anspruch 10 oder 11, dass zusätzlich gasförmiger Stickstoff in die Reaktionsmischung eingeleitet wird, wenn der pH-Wert der Reaktionsmischung unter 2,2 liegt.

13. Verfahren zur Herstellung von Hämatit-Pigmenten gemäß Anspruch 1, umfassend die Umsetzung von Eisen, Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und Eisen(II)nitratlösung in Gegenwart von zumindest einem sauerstoffhaltigen Gas bei Temperaturen von 70 bis 99°C, **dadurch gekennzeichnet, dass** die Umsetzung während der Begasung mit einem sauerstoffhaltigem Gas, enthaltend bevorzugt einen Sauerstoffgehalt von 15 bis 100 Vol.%, in einem pH-Bereich von pH 2,2 bis pH 4,0, bevorzugt von pH 2,2 bis pH 3,0 stattfindet, wobei eine Hämatit-Pigmentsuspension erzeugt wird, und Einleitung von gasförmigem Stickstoff, bevorzugt enthaltend von 0 bis 10 Vol.% Sauerstoff. besonders bevorzugt von 0 bis 1 Vol. % Sauerstoff, solange der pH-Wert der Reaktionsmischung weniger als 2,2 beträgt.

14. Verfahren zur Herstellung von Hämatit-Pigmenten nach einem der Ansprüche 10 bis 13, **dadurch gekennzeichnet, dass** das Eisen als Mischung von Eisen und Wasser eingesetzt wird, wobei das Wasser eine Leitfähigkeit von 20 µS/cm oder weniger, bevorzugt von 10 µS/cm oder weniger, besonders bevorzugt 5 µS/cm oder weniger, aufweist.

15. Verwendung der Hämatit-Pigmente nach einem der Ansprüche 1 bis 9 zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, oder die Verwendung als Adsorptionsmittel, Sensor, Katalysator, oder die Verwendung als Komponente in Batterien oder Akkumulatoren, Elektroden oder die Verwendung als Rohstoff zur Herstellung anderer Eisenoxide oder Eisenchemikalien.

16. Verfahren zur Einfärbung von Erzeugnissen der Farben-, Lack-, Beschichtungs-, Baustoff-, Kunststoff- oder Papierindustrie, von Lebensmitteln, Einbrenn- oder Coil-Coat-Lacken, Sandgranulaten, Kalksandsteinen, Emaille, Keramik-Glasuren, Asphalt oder Rindenmulch, oder von Produkten der Pharmaindustrie, bevorzugt von Tabletten, mit den Hämatit-Pigmenten nach einem der Ansprüche 1 bis 9, wobei die Einfärbung nach an sich bekannten Methoden erfolgt.

17. Erzeugnis aus der Farben-, Lack-, Beschichtungs-, Baustoff-, Kunststoff- oder Papierindustrie, aus Lebensmitteln, Einbrenn- oder Coil-Coat-Lacken, Sandgranulaten, Kalksandsteinen, Emaille, Keramik-Glasuren, Asphalt oder Rindenmulch, oder aus Produkten der Pharmaindustrie, bevorzugt von Tabletten, enthaltend das Hämatit-Pigment nach einem der Ansprüche 1 bis 9.

## Claims

1. Haematite pigment, **characterized in that** the sum of the a* values thereof in full shade and with reduction in surface coating testing is from 58.0 to 61.0 CIELAB units, preferably from 58.0 to 60.0 CIELAB units, more preferably from 58.5 to 61.0 CIELAB units, more preferably from 58.5 to 60.0 CIELAB units, particularly preferably from 59.0 to 61.0 CIELAB units, more particularly preferably from 59.0 to 60.0, where the haematite pigment has a water content of 1.0% by weight or more.

2. Haematite pigment according to Claim 1 comprising the α-Fe₂O₃ modification.

3. Haematite pigment according to Claim 1 or 2 comprising an organic coating, preferably with oils, waxes, fatty acids or fatty acid salts, and/or an inorganic coating, preferably with carbonates, oxides or hydroxides of alkali and alkaline earth metals or of Mg, Zn, Al, La, Y, Zr, Sn and/or Ca.

4. Haematite pigment according to any of Claims 1 to 3 comprising neither an organic coating nor an inorganic coating.

5. Haematite pigment according to any of Claims 1 to 4 having a particle size of from 0.1 to 0.3 µm.

6. Haematite pigment according to Claim 5, having a particle size of from 0.1 to 0.3 µm, with at least 80% by weight of the haematite pigment having a particle size of from 0.1 to 0.3 µm.

7. Haematite pigment according to any of Claims 1 to 6 having a water content of from 1.0% by weight to 5.0% by weight.

8. Haematite pigment according to any of Claims 1 to 7, **characterized in that** it has a Newtonian flow behavior in the paste viscosity test, with the viscosity at each measured value at shear rates of 500/s, 1000/s, 1500/s and 2000/s deviating by 10% or less, preferably by 5% or less, from the arithmetic mean of the measured values at the shear rates of 500/s, 1000/s, 1500/s and 2000/s.

9. Haematite pigment according to any of claims 1 to 8, **characterized in that** it has viscosities in the paste viscosity test at shear rates of 500/s, 1000/s, 1500/s and 2000/s of from 0.300 to 0.400 Pa▪s.

10. Process for producing haematite pigments according to Claim 1, which comprises the reaction of iron, haematite nucleus suspension containing haematite nuclei having a particle size of 100 nm or less and a specific BET surface area of from 40 m²/g to 150 m²/g (measured in accordance with DIN 66131) and iron (II) nitrate solution in the presence of at least one oxygen-containing gas at temperatures of from 70 to 99°C, **characterized in that** the reaction takes place during introduction of an oxygen-containing gas in a pH range from pH 2.2 to pH 4.0, preferably from pH 2.2 to pH 3.0, producing a haematite pigment suspension.

11. Process for producing haematite pigments according to Claim 10, **characterized in that** the reaction takes place at least in the first 40 hours during introduction of an oxygen-containing gas, preferably for more than 80% of the first 40 hours during introduction of the gas in a pH range from pH 2.2 to pH 4.0, preferably from pH 2.2 to pH 3.0.

12. Process for producing haematite pigments according to Claim 10 or 11, **characterized in that** gaseous nitrogen is additionally introduced into the reaction mixture when the pH of the reaction mixture is below 2.2.

13. Process for producing haematite pigments according to Claim 1, which comprises the reaction of iron, haematite nucleus suspension containing haematite nuclei having a particle size of 100 nm or less and a specific BET surface area of from 40 m²/g to 150 m²/g (measured in accordance with DIN 66131) and iron (II) nitrate solution in the presence of at least one oxygen-containing gas at temperatures of from 70 to 99°C, **characterized in that** the reaction takes place during introduction of an oxygen-containing gas which preferably has an oxygen content of from 15 to 100% by volume in a pH range from pH 2.2 to pH 4.0, preferably from pH 2.2 to pH 3.0, producing a haematite pigment suspension, and introduction of gaseous nitrogen, preferably containing from 0 to 10% by volume of oxygen, particularly preferably from 0 to 1% by volume of oxygen, as long as the pH of the reaction mixture is less than 2.2.

14. Process for producing haematite pigments according to any of Claims 10 to 13, **characterized in that** iron is used as a mixture of iron and water, with the water having a conductivity of 20 µS/cm or less, preferably of 10 µS/cm or less, particularly preferably 5 µS/cm or less.

15. Use of the haematite pigments according to any of Claims 1 to 9 for coloring products of the paints, varnishes, coatings, building materials, plastics or paper industry, for coloring foodstuffs, baking enamels or coil coatings, sand granules, sand-lime bricks, enamels, ceramic glazes, asphalts or bark mulch, or for coloring products of the pharmaceutical industry, preferably tablets, or use as adsorbent, sensor, catalyst or use as component in batteries or accumulators, electrodes or use as raw material for producing other iron oxides or iron chemicals.

16. Method of coloring products of the paints, varnishes, coatings, building materials, plastics or paper industry, for coloring foodstuffs, baking enamels or coil coatings, sand granules, sand-lime bricks, enamels, ceramic glazes, asphalt or bark mulch, or for coloring products of the pharmaceutical industry, preferably tablets, using the haematite pigments according to any of Claims 1 to 9, with coloring being carried out by methods known per se.

17. Product from the paints, varnishes, coatings, building materials, plastics or paper industry, from foodstuffs, baking enamels or coil coatings, sand granules, sand-lime bricks, enamels, ceramic glazes, asphalt or bark mulch, or from products of the pharmaceutical industry, preferably tablets, containing the haematite pigment according to any of Claims 1 to 9.

## Revendications

1. Pigment hématite, **caractérisé en ce que** sa somme des valeurs a* dans la couleur en masse et dans l'éclaircissement lors de l'évaluation du vernis est de 58,0 à 61,0 unités CIELAB, de préférence de 58,0 à 60,0 unités CIELAB, de manière davantage préférée de 58,5 à 61,0 unités CIELAB, de manière davantage préférée de 58,5 à 60,0 unités CIELAB, de manière particulièrement préférée de 59,0 à 61,0 unités CIELAB, de manière encore davantage préférée de 59,0 à 60,0, le pigment hématite présentant une teneur en eau de 1,0 % en poids ou plus.

2. Pigment hématite selon la revendication 1, comprenant la forme α-Fe₂O₃.

3. Pigment hématite selon la revendication 1 ou 2, comprenant un revêtement organique, de préférence avec des huiles, des cires, des acides gras ou des sels d'acides gras, et/ou un revêtement inorganique, de préférence avec des carbonates, des oxydes ou des hydroxydes de métaux alcalins et alcalino-terreux ou de Mg, Zn, Al, La, Y, Zr, Sn et/ou Ca.

4. Pigment hématite selon l'une quelconque des revendications 1 à 3, ne comprenant ni un revêtement organique, ni un revêtement inorganique.

5. Pigment hématite selon l'une quelconque des revendications 1 à 4, présentant une taille de particule de 0,1 à 0,3 µm.

6. Pigment hématite selon la revendication 5, présentant une taille de particule de 0,1 à 0,3 µm, au moins 80 % en poids du pigment hématite présentant une taille de particule de 0,1 à 0,3 µm.

7. Pigment hématite selon l'une quelconque des revendications 1 à 6, présentant une teneur en eau de 1,0 % en poids à 5,0 % en poids.

8. Pigment hématite selon l'une quelconque des revendications 1 à 7, **caractérisé en ce qu'**il présente lors du test de viscosité en pâte un comportement d'écoulement newtonien, la viscosité lors de chaque valeur de mesure à des vitesses de cisaillement de 500/s, 1 000/s, 1 500/s et 2 000/s déviant de 10 % ou moins, de préférence de 5 % ou moins, de la valeur moyenne arithmétique des valeurs de mesure des vitesses de cisaillement de 500/s, 1 000/s, 1 500/s et 2 000/s.

9. Pigment hématite selon l'une quelconque des revendications 1 à 8, **caractérisé en ce qu'**il présente lors du test de viscosité en pâte des viscosités à des vitesses de cisaillement de 500/s, 1 000/s, 1 500/s et 2 000/s de 0,300 à 0,400 Pa·s.

10. Procédé de fabrication de pigments hématite selon la revendication 1, comprenant la mise en réaction de fer, d'une suspension de germes d'hématite, contenant des germes d'hématite qui présentent une taille de particule de 100 nm ou moins et une surface spécifique BET de 40 m²/g à 150 m²/g (mesurée selon DIN 66131), et d'une solution de nitrate de fer (II) en présence d'au moins un gaz contenant de l'oxygène à des températures de 70 à 99 °C, **caractérisé en ce que** la réaction a lieu pendant le gazage avec un gaz contenant de l'oxygène dans une plage de pH allant de pH 2,2 à pH 4,0, de préférence allant de pH 2,2 à pH 3,0, une suspension de pigments hématite étant formée.

11. Procédé de fabrication de pigments hématite selon la revendication 10, **caractérisé en ce que** la réaction a lieu au moins pendant les 40 premières heures pendant le gazage avec un gaz contenant de l'oxygène, de préférence pendant plus 80 % des 40 premières heures pendant le gazage, dans une plage de pH allant de pH 2,2 à pH 4,0, de préférence de pH 2,2 à pH 3,0.

12. Procédé de fabrication de pigments hématite selon la revendication 10 ou 11, **caractérisé en ce que** de l'azote gazeux est en outre introduit dans le mélange réactionnel lorsque le pH du mélange réactionnel est inférieur à 2,2.

13. Procédé de fabrication de pigments hématite selon la revendication 1, comprenant la mise en réaction de fer, d'une suspension de germes d'hématite, contenant des germes d'hématite qui présentent une taille de particule de 100 nm ou moins et une surface spécifique BET de 40 m²/g à 150 m²/g (mesurée selon DIN 66131), et d'une solution de nitrate de fer (II) en présence d'au moins un gaz contenant de l'oxygène à des températures de 70 à 99 °C, **caractérisé en ce que** la réaction a lieu pendant le gazage avec un gaz contenant de l'oxygène contenant de préférence une teneur en oxygène de 15 à 100 % en volume dans une plage de pH allant de pH 2,2 à pH 4,0, de préférence de pH 2,2 à pH 3,0, une suspension de pigments hématite étant formée, et l'introduction d'azote gazeux, de préférence contenant 0 à 10 % en volume d'oxygène, de manière particulièrement préférée 0 à 1 % en volume d'oxygène, pendant que le pH du mélange réactionnel est inférieur à 2,2.

14. Procédé de fabrication de pigments hématite selon l'une quelconque des revendications 10 à 13, **caractérisé en ce que** le fer est utilisé sous la forme d'un mélange de fer et d'eau, l'eau présentant une conductivité de 20 µS/cm ou moins, de préférence de 10 µS/cm ou moins, de manière particulièrement préférée de 5 µS/cm ou moins.

15. Utilisation des pigments hématite selon l'une quelconque des revendications 1 à 9 pour la coloration de produits de l'industrie des peintures, des vernis, des revêtements, des matériaux de construction, des matières plastiques ou du papier, de produits alimentaires, de vernis émaillés ou de prélaquage en continu, de granulats de sable, de briques silico-calcaire, d'émaux, de glaçages céramiques, d'asphalte ou de paillis d'écorce, ou de produits de l'industrie pharmaceutique, de préférence de comprimés, ou utilisation en tant qu'agent d'adsorption, capteur, catalyseur, ou utilisation en tant que composant dans des batteries ou des accumulateurs, des électrodes, ou utilisation en tant que matière première pour la fabrication d'autres oxydes de fer ou de produits chimiques à base de fer.

16. Procédé de coloration de produits de l'industrie des peintures, des vernis, des revêtements, des matériaux de construction, des matières plastiques ou du papier, de produits alimentaires, de vernis émaillés ou de prélaquage en continu, de granulats de sable, de briques silico-calcaire, d'émaux, de glaçages céramiques, d'asphalte ou de paillis d'écorce, ou de produits de l'industrie pharmaceutique, de préférence de comprimés, avec les pigments hématite selon l'une quelconque des revendications 1 à 9, la coloration ayant lieu par des procédés connus en soi.

17. Produit de l'industrie des peintures, des vernis, des revêtements, des matériaux de construction, des matières plastiques ou du papier, de produits alimentaires, de vernis émaillés ou de prélaquage en continu, de granulats de sable, de briques silico-calcaire, d'émaux, de glaçages céramiques, d'asphalte ou de paillis d'écorce, ou de produits de l'industrie pharmaceutique, de préférence de comprimés, contenant le pigment hématite selon l'une quelconque des revendications 1 à 9.
